# EUROPEAN PATENT SPECIFICATION

(11) **EP 4 346 188 B1**
(45) Date of publication and mention of the grant of the patent: **17.09.2025**
(21) Application number: 23181725.5
(22) Date of filing: 27.06.2023
(51) Int. Cl.: H04L 67/1042

(54) **CONTROL DEVICE, CONTROL METHOD, AND CONTROL PROGRAM USING DISTRIBUTION SOURCE AND DESTINATION LISTS**
STEUERUNGSVORRICHTUNG, STEUERUNGSVERFAHREN UND STEUERUNGSPROGRAMM UNTER NUTZUNG VON LISTEN VON VERTEILUNGSGSQUELLEN UND -SENKEN
DISPOSITIF DE COMMANDE, PROCÉDÉ DE COMMANDE ET PROGRAMME DE COMMANDE EN UTILISANT DES LISTES DE SOURCE ET DESTINATION DE DISTRIBUTION

(30) Priority: 30.09.2022 JP 2022158456
(43) Date of publication of application: 03.04.2024
(73) Proprietor: FUJITSU LIMITED, Kawasaki-shi, Kanagawa 211-8588 (JP)
(72) Inventor: Inoue, Koki, Kawasaki-shi, Kanagawa, 211-8588 (JP); Taka, Kenji, Kawasaki-shi, Kanagawa, 211-8588 (JP); Nakayama, Takayoshi, Kawasaki-shi, Kanagawa, 211-8588 (JP); Fukuzaki, Shinya, Kawasaki-shi, Kanagawa, 211-8588 (JP); Itaya, Satoshi, Kawasaki-shi, Kanagawa, 211-8588 (JP); Otsuki, Naofumi, Kawasaki-shi, Kanagawa, 211-8588 (JP); Usui, Tomomi, Kawasaki-shi, Kanagawa, 211-8588 (JP); Fukumoto, Wataru, Kawasaki-shi, Kanagawa, 211-8588 (JP)
(74) Representative: Hoffmann Eitle

(56) References cited:
- JP-A- 2018 005 301
- US-A1- 2008 031 130
- US-A1- 2020 201 990
- US-A1- 2021 067 438

## Description

### FIELD

The embodiment discussed herein is related to a control system and the like.

### BACKGROUND

There is an increasing need to distribute and utilize data between organizations. In particular, in order to promote quick and flexible data utilization when a plurality of organizations cooperates in a chained and hierarchical manner, it is desirable that each organization not only requests an organization as a data generation source to provide data but also performs nth-order transmission of the data.

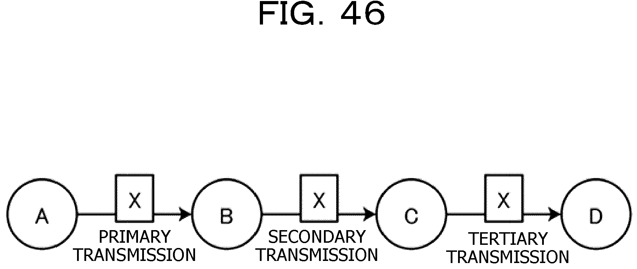

FIG. 46 is a diagram for explaining the nth-order transmission. Primary to tertiary transmission will be described in the description of FIG. 46. Furthermore, terminal devices used by first to fourth organizations will be described as nodes A, B, C, and D, respectively. In the primary transmission, the node A transmits data X to the node B. In the secondary transmission, the node B transmits the data X received from the node A to the node C. In the tertiary transmission, the node C transmits the data X received from the node B to the node D.

For example, it is inefficient for the most upstream node A to exchange data with the remaining nodes B to D one by one, and the load is concentrated on the node A. On the other hand, according to the nth-order transmission illustrated in FIG. 46, no load is concentrated on a specific node, and data may be efficiently provided.

Japanese Laid-open Patent Publication No. 2018-005301 and International Publication Pamphlet No. WO 2018/216206 are disclosed as related art.
US 2008/031130 A1 discloses a method, apparatus and computer program product for minimizing or preventing duplicate traffic during point to multipoint tree switching in a network. In its operation, embodiments disclosed therein utilize control plane trigger mechanisms to handle the receipt of duplicate traffic by network entities after the occurrence of a network failure event. Generally, the control plane trigger mechanism prevents a network entity from processing multicast traffic from both old and new upstream data paths resulting from typical network convergence procedures. The methods and apparatus described therein apply to standard rerouting procedures as well as fast rerouting procedures for multicast traffic in a network.
US 2021/067438 A1 discloses that, in multicast management, topology information identifying multicast distribution paths is maintained at a router serving as a root of a multicast distribution tree and/or as a first hop router. The router can detect congestion or failures based on messages from other routers. The router can request another router to change the multicast distribution paths as needed to load-balance the traffic, avoid congestion or failure, or eliminate duplicate traffic. In some embodiments, ECMP Redirect functionality is expanded to ECMP paths of arbitrary number of hops. Other features are also provided.

### SUMMARY

### TECHNICAL PROBLEM

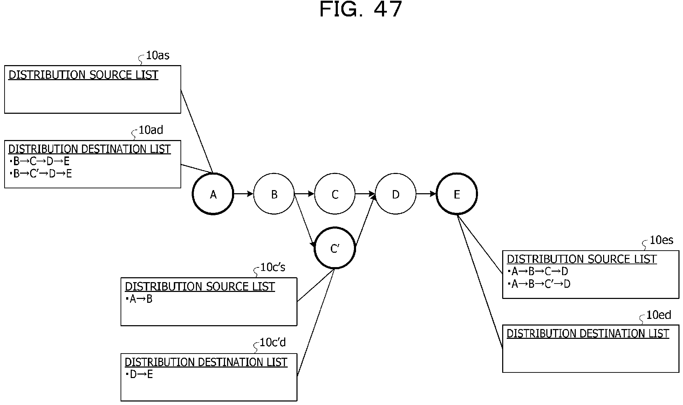

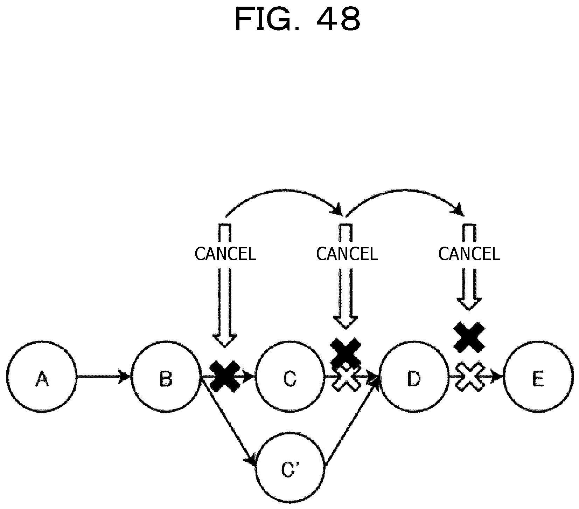

A function needed in the nth-order transmission described in the related art will be described. FIGs. 47 and 48 are diagrams for explaining the function needed in the nth-order transmission. Functions (1) and (2) needed in the nth-order transmission will be described with reference to FIG. 47. A function (3) needed in the nth-order transmission will be described with reference to FIG. 48. In FIGs. 47 and 48, terminal devices used by first to sixth organizations will be described as nodes A, B, C, C', D, and E, respectively. It is assumed that data transmission destinations of the nodes A to E are set in advance. For example, the node A transmits data to the node B. The node B transmits the data to the node C or to the node C'. The node C transmits the data to the node D. The node C' transmits the data to the node D. The node D transmits the data to the node E.

FIG. 47 will be described. The function (1) needed in the nth-order transmission is a function in which a transmission destination node (node that has received data) is enabled to grasp a route through which the data has been distributed (list of nodes involved in transmission: distribution source list). The route is indicated using a right arrow "→". For example, n1 → n2 → n3 indicates that the data route is a route that sequentially passes a node n1, a node n2, and a node n3.

For example, according to the function (1), a distribution source list 10as is set in the node A, a distribution source list 10c's is set in the node C', and a distribution source list 10es is set in the node E. Description of distribution source lists of other nodes will be omitted. Since the node A is the most upstream node, the distribution source list 10as is an empty set. "A → B" is set in the distribution source list 10c's. "A → B → C → D" and "A → B → C' → D" are set in the distribution source list 10es.

The function (2) needed in the nth-order transmission is a function in which, in a case where data transmitted from a transmission source node to an adjacent node is transmitted to another node, a route thereof (list of nodes involved in transmission: distribution destination list) may be grasped.

For example, according to the function (2), a distribution destination list 10ad is set in the node A, a distribution destination list 10c'd is set in the node C', and a distribution destination list 10ed is set in the node E. Description of distribution destination lists of other nodes will be omitted. "B → C → D → E" and "B → C' → D → E" are set in the distribution destination list 10ad. "D → E" is set in the distribution destination list 10c'd. Since the node E is the most downstream node, the distribution destination list 10ed is an empty set.

FIG. 48 will be described. The function (3) needed in the nth-order transmission is a function in which a node is enabled to cancel data transmission. According to the function (3), in a case where a node cancels transmission and the transmission destination node has transmitted the corresponding data to another node, subsequent transmission is also canceled in a chained manner. For example, in a case where the node B cancels transmission of the data X to the node C, it means that the transmission from the node C to the node D and the transmission from the node D to the node E are canceled with respect to the transmission of the data X. When data transmission cancellation occurs, the distribution destination list and the distribution source list are updated according to the transmission cancellation.

However, in the existing nth-order transmission in which each node transmits and receives data in an autonomously distributed manner, the functions (1) to (3) described above are not provided, and each node may not correctly grasp the data distribution source and the data distribution destination. Furthermore, when data transmission cancellation occurs, each node may not update the distribution source list and the distribution destination list.

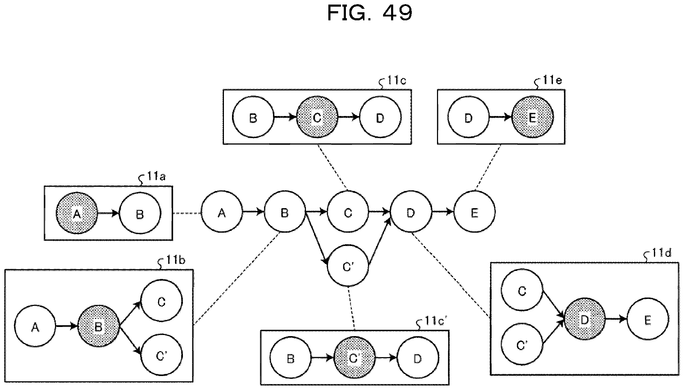

FIG. 49 is a diagram for explaining a problem of an existing technique. A distribution destination and a distribution source that may be independently grasped by each node are only nodes that have directly transmitted and received data. For example, a viewpoint of the node A is a viewpoint 11a. The node A grasps only the transmission destination node B. A viewpoint of the node B is a viewpoint 11b. The node B grasps the transmission source node A, and the transmission destination nodes C and C'.

A viewpoint of the node C is a viewpoint 11c. The node C grasps the transmission source node B, and the transmission destination node D. A viewpoint of the node C' is a viewpoint 11c'. The node C' grasps the transmission source node B, and the transmission destination node D. A viewpoint of the node D is a viewpoint 11d. The node D grasps the transmission source nodes C and C', and the transmission destination node E. A viewpoint of the node E is a viewpoint 11e. The node E grasps the transmission source node D.

For example, while the node A desires to grasp information regarding the distribution destination list 10ad described in FIG. 47, it may grasp only up to the transmission destination node B.

While the node C desires to grasp the distribution source "A → B" before the node B and the distribution destination "D → E" after D, it may grasp only up to the node B as the distribution source and the node D as the distribution destination. Note that the node C is not to grasp the distribution route "B → C' → D → E" that the node C is not involved in.

In other words, in the nth-order transmission in which each node transmits and receives data in an autonomously distributed manner, each node needs to correctly grasp the data distribution source and the data distribution destination.

In one aspect, an object of the embodiment is to provide a control system, a control device, a control method, and a control program that enable each node to correctly grasp a data distribution source and a data distribution destination in nth-order transmission.

### SOLUTION TO PROBLEM

According to an aspect of the embodiments, there is provided a control system including a plurality of control devices configured to perform nth-order transmission, wherein each control device of the plurality of control devices includes: a storage device configured to store, in relation to the plurality of control devices, a distribution source list that stores a list of the plurality of control devices to be passed through from a most upstream control device to the control device and a distribution destination list that stores a list of the plurality of control devices to be passed through from the control device to a most downstream control device; and a processor coupled to the storage device, the processor being configured to perform control processing including: in a case where an update request in which a first distribution source list of a first control device being any one of the plurality of control devices is set is received, updating the distribution source list based on the update request, in a case where the distribution destination list is not an empty set, generating a new update request based on the updated distribution source list, and transmitting the new update request to a second control device being a control device in the distribution destination list; and in a case where an update completion response in which a second distribution destination list of the second control device is set is received from the second control device, updating the distribution destination list based on the update completion response.

### ADVANTAGEOUS EFFECTS OF INVENTION

Each node is enabled to correctly grasp a data distribution source and a data distribution destination in the nth-order transmission.

### BRIEF DESCRIPTION OF DRAWINGS

FIG. 1 is a diagram illustrating a control system according to the present embodiment;
FIG. 2 is a flowchart (1) illustrating a processing procedure (Forward) at the time of transmission;
FIG. 3 is a flowchart (2) illustrating the processing procedure (Forward) at the time of transmission;
FIG. 4 is a flowchart (1) illustrating a processing procedure (Backward) at the time of transmission;
FIG. 5 is a flowchart (2) illustrating the processing procedure (Backward) at the time of transmission;
FIG. 6 is a diagram (1) for explaining a process at the time of node transmission;
FIG. 7 is a diagram (2) for explaining the process at the time of node transmission;
FIG. 8 is a diagram (3) for explaining the process at the time of node transmission;
FIG. 9 is a diagram (4) for explaining the process at the time of node transmission;
FIG. 10 is a diagram (5) for explaining the process at the time of node transmission;
FIG. 11 is a diagram (6) for explaining the process at the time of node transmission;
FIG. 12 is a diagram (7) for explaining the process at the time of node transmission;
FIG. 13 is a diagram (8) for explaining the process at the time of node transmission;
FIG. 14 is a diagram (9) for explaining the process at the time of node transmission;
FIG. 15 is a diagram (10) for explaining the process at the time of node transmission;
FIG. 16 is a diagram (11) for explaining the process at the time of node transmission;
FIG. 17 is a diagram (12) for explaining the process at the time of node transmission;
FIG. 18 is a diagram (13) for explaining the process at the time of node transmission;
FIG. 19 is a diagram (14) for explaining the process at the time of node transmission;
FIG. 20 is a diagram (15) for explaining the process at the time of node transmission;
FIG. 21 is a diagram (16) for explaining the process at the time of node transmission;
FIG. 22 is a diagram (17) for explaining the process at the time of node transmission;
FIG. 23 is a diagram (18) for explaining the process at the time of node transmission;
FIG. 24 is a flowchart (1) illustrating a processing procedure at the time of transmission cancellation by a node;
FIG. 25 is a flowchart (2) illustrating the processing procedure at the time of transmission cancellation by the node;
FIG. 26 is a flowchart (3) illustrating the processing procedure at the time of transmission cancellation by the node;
FIG. 27 is a diagram (1) for explaining a process at the time of transmission cancellation;
FIG. 28 is a diagram (2) for explaining the process at the time of transmission cancellation;
FIG. 29 is a diagram (3) for explaining the process at the time of transmission cancellation;
FIG. 30 is a diagram (4) for explaining the process at the time of transmission cancellation;
FIG. 31 is a diagram (5) for explaining the process at the time of transmission cancellation;
FIG. 32 is a diagram (6) for explaining the process at the time of transmission cancellation;
FIG. 33 is a diagram (7) for explaining the process at the time of transmission cancellation;
FIG. 34 is a diagram (8) for explaining the process at the time of transmission cancellation;
FIG. 35 is a diagram (9) for explaining the process at the time of transmission cancellation;
FIG. 36 is a diagram (10) for explaining the process at the time of transmission cancellation;
FIG. 37 is a diagram (11) for explaining the process at the time of transmission cancellation;
FIG. 38 is a diagram (12) for explaining the process at the time of transmission cancellation;
FIG. 39 is a diagram (13) for explaining the process at the time of transmission cancellation;
FIG. 40 is a diagram (14) for explaining the process at the time of transmission cancellation;
FIG. 41 is a diagram (15) for explaining the process at the time of transmission cancellation;
FIG. 42 is a diagram (16) for explaining the process at the time of transmission cancellation;
FIG. 43 is a functional block diagram illustrating a node configuration according to the present embodiment;
FIG. 44 is a diagram illustrating an exemplary data structure of management information;
FIG. 45 is a diagram illustrating an exemplary hardware configuration of a computer that implements functions similar to those of the node according to the embodiment;
FIG. 46 is a diagram for explaining nth-order transmission;
FIG. 47 is a diagram (1) for explaining a function needed in the nth-order transmission;
FIG. 48 is a diagram (2) for explaining the function needed in the nth-order transmission; and
FIG. 49 is a diagram for explaining a problem of an existing technique.

### DESCRIPTION OF EMBODIMENTS

Hereinafter, an embodiment of a control system, a control device, a control method, and a control program disclosed in the present application will be described in detail with reference to the drawings. Note that the disclosure is not limited by the embodiment.

### [Embodiment]

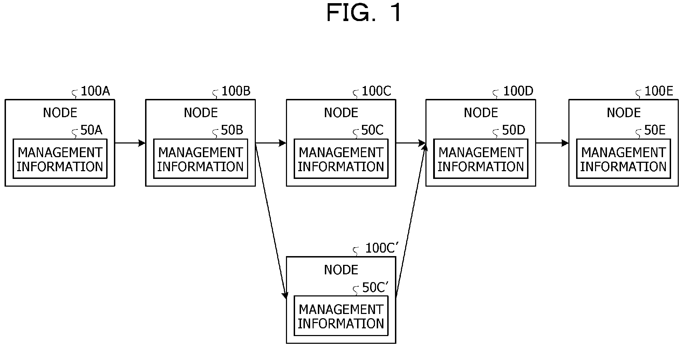

An exemplary control system according to the present embodiment will be described. FIG. 1 is a diagram illustrating the control system according to the present embodiment. As illustrated in FIG. 1, the control system includes nodes 100A, 100B, 100C, 100C', 100D, and 100E. The nodes 100A to 100E transmits and receives data in an autonomously distributed manner to carry out nth-order transmission. The most upstream node is assumed to be the node 100A, and the most downstream node is assumed to be the node 100E. The nodes 100A to 100E are examples of a "control device".

A node 100i (i = A to E) has management information 50i, and the management information 50i stores a distribution source list srcᵢ (may be referred to as "srci", "src_i", or the like) and a distribution destination list dstᵢ (may be referred to as "dsti", "dst_i", or the like). The distribution source list srcᵢ is a set of lists of nodes that have been passed through from the most upstream node 100A to the node 100i. The distribution destination list dstᵢ is a set of lists of nodes to be passed through from the node 100i to the most downstream node 100E. An initial value of the distribution source list srcᵢ and the distribution destination list dstᵢ is an empty set φ.

It is assumed that an adjacent node to which the node 100i transmits data is determined in advance by an organization that manages the node 100i.

For example, the node 100A is coupled to the node 100B, and transmits data to the node 100B. The node 100A has management information 50A. The management information 50A stores a distribution source list src_{A} (may be referred to as "srcA", "src_A", or the like) and a distribution destination list dst_{A} (may be referred to as "dstA", "dst_A", or the like).

The node 100B is coupled to the nodes 100A, 100C, and 100C', and transmits the data to the node 100C or to the node 100C'. The node 100B has management information 50B. The management information 50B stores a distribution source list src_{B} (may be referred to as "srcB", "src_B", or the like) and a distribution destination list dst_{B} (may be referred to as "dstB", "dst_B", or the like)

The node 100C is coupled to the nodes 100B and 100D, and transmits the data to the node 100D. The node 100C has management information 50C. The management information 50C stores a distribution source list src_{C} (may be referred to as "srcC", "src_C", or the like) and a distribution destination list dst_{C} (may be referred to as "dstC", "dst_C", or the like).

The node 100C' is coupled to the nodes 100B and 100D, and transmits the data to the node 100D. The node 100C' has management information 50C'. The management information 50C' stores a distribution source list srcC' (may be referred to as "srcC' ", "src_C' ", or the like) and a distribution destination list dst_{C'} (may be referred to as "dstC' ", "dst_C' ", or the like)

The node 100D is coupled to the nodes 100C, 100C', and 100E, and transmits the data to the node 100E. The node 100D has management information 50D. The management information 50D stores a distribution source list src_{D} (may be referred to as "srcD", "src_D", or the like) and a distribution destination list dst_{D} (may be referred to as "dstD", "dst_D", or the like).

The node 100E is coupled to the node 100D. The node 100E has management information 50E. The management information 50E stores a distribution source list src_{E} (may be referred to as "srcE", "src_E", or the like) and a distribution destination list dst_{E} (may be referred to as "dstE", "dst_E", or the like).

Here, a node updates its own management information at the time of data transmission and reception, and transmits an update request of another piece of management information to another node. The node that has received the update request of the management information updates the management information, and transmits an update request of management information to still another node when a specific condition is satisfied.

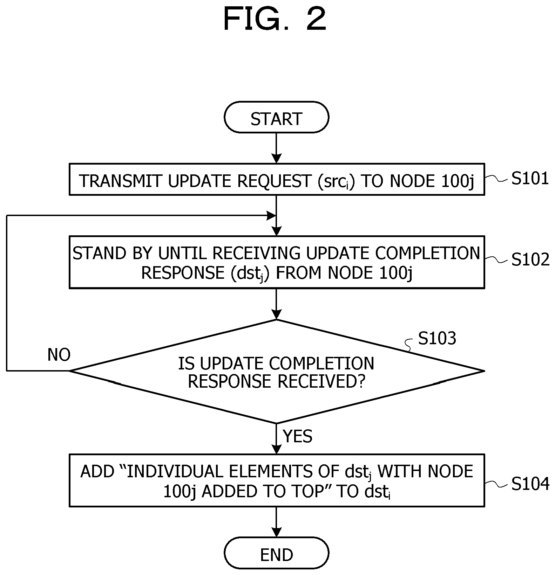

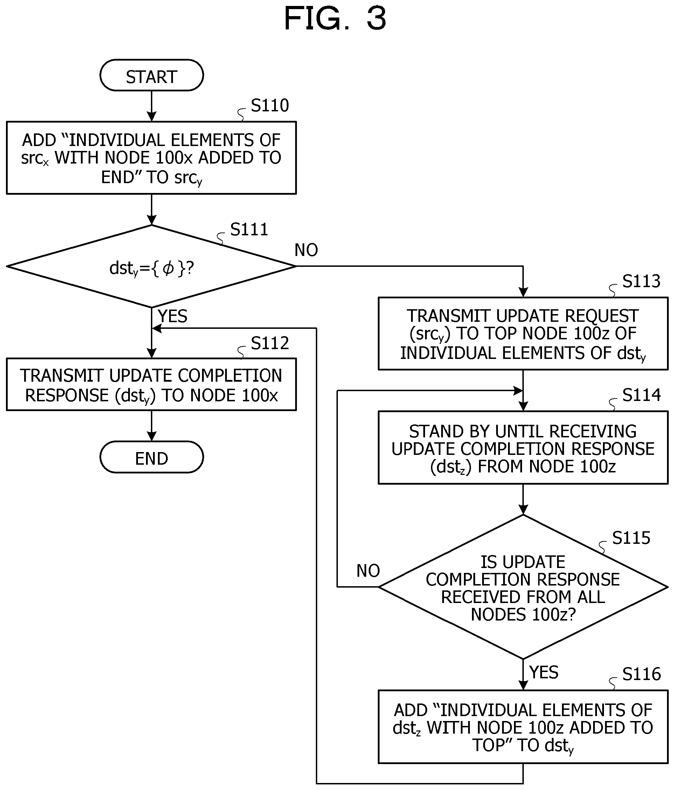

First, an exemplary processing procedure at the time of transmission of the node 100i will be described. In FIGs. 2 and 3 to be described below, data transmission (Forward) from the upstream side to the downstream side will be described. FIG. 2 is a flowchart (1) illustrating the processing procedure (Forward) at the time of transmission. In FIG. 2, a case where the node 100i transmits data to a node 100j will be described.

As illustrated in FIG. 2, the node 100i transmits an update request (srcᵢ) to the node 100j (step S101). The node 100i stands by until receiving an update completion response (dstⱼ) from the node 100j (step S102). It is noted that the "update request (srcᵢ)" means to be an update request including the distribution source list srcᵢ of the node 100i, and that the "update completion response (dstⱼ)" means to be a completion response including the distribution destination list dstⱼ of the node 100j.

If the node 100i fails to receive the update completion response (No in step S103), the process proceeds to step S102. If the node 100i has received the update completion response (Yes in step S103), the process proceeds to step S104.

The node 100i adds, to the distribution destination list dstᵢ, "individual elements of dstⱼ with the node 100j added to the top thereof" (step S104). Thereby, identification information of the node 100j and each element included in the dstⱼ are added to the distribution destination list dstᵢ of the node 100i.

FIG. 3 is a flowchart (2) illustrating the processing procedure (Forward) at the time of transmission. FIG. 3 illustrates a processing procedure of a node 100y in a case where an update request is transmitted from a node 100x to the node 100y. The node 100x is any one node of the nodes 100A to 100E. The node y is any one node of the nodes 100A to 100E that has received the update request from the node x.

The node 100y adds, to the distribution source list src_{y}, "individual elements of srcₓ with the node 100x added to the end thereof"(step S110). Thereby, identification information of the node 100x and each element included in the srcₓ are added to the distribution source list src_{y} of the node 100y. The node 100y determines whether or not a condition of dst_{y} = {φ} is satisfied (step S111). If the condition of dst_{y} = {φ} is satisfied (Yes in step S111), the node 100y transmits an update completion response (dst_{y}) to the node 100x (step S112).

On the other hand, if the condition of dst_{y} = {φ} is not satisfied (No in step S111), the node 100y proceeds to step S113. The node 100y transmits the update request (src_{y}) to a node 100z (which may be a plurality of nodes) at the top of individual elements of dst_{y} (step S113).

The node 100y stands by until receiving an update completion response (dst_{z}) from the node 100z (step S114). If the node 100y has not received the update completion response from all the nodes 100z (No in step S115), the process proceeds to step S114.

If the node 100y has received the update completion response from all the nodes 100z (Yes in step S115), the process proceeds to step S116. The node 100y adds "individual elements of dst_{z} with the node 100z added to the top thereof" to dst_{y} (step S116), and the process proceeds to step S112.

The node 100y recursively executes the process when the update request is received, which has been described with reference to FIG. 3, until dst_{y} becomes an empty set.

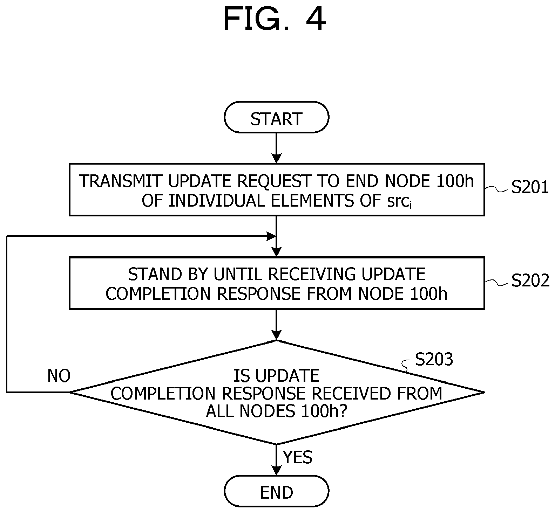

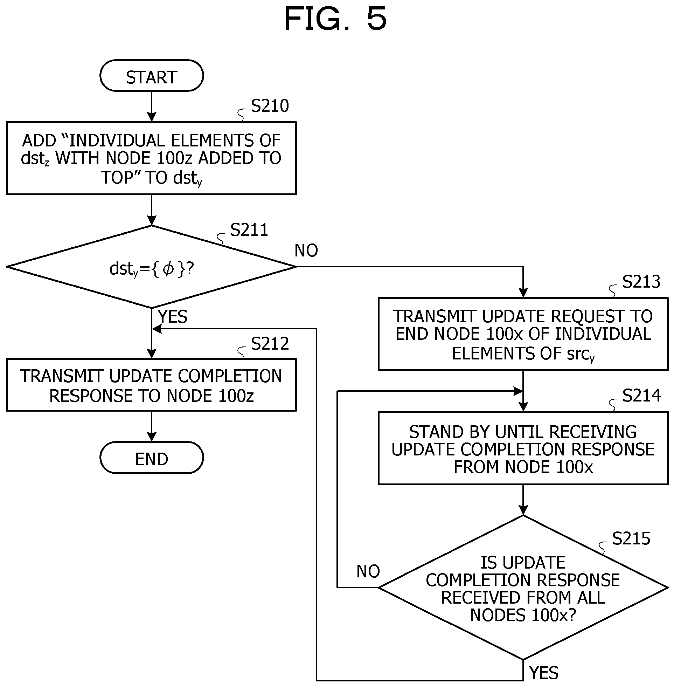

In FIGs. 4 and 5 to be described below, data transmission (Backward) from the upstream side to the downstream side will be described. FIG. 4 is a flowchart (1) illustrating the processing procedure (Backward) at the time of transmission. In FIG. 4, a case where the node 100i transmits data to the node 100j will be described.

As illustrated in FIG. 4, the node 100i transmits an update request to a node 100h (which may be a plurality of nodes) at the end of individual elements of srcᵢ (step S201). The node 100i stands by until receiving an update completion response from the node 100h (step S202).

If the node 100i has not received the update completion response from all the nodes 100h (No in step S203), the process proceeds to step S202.

If the node 100i has received the update completion response from all the nodes 100h (Yes in step S203), the process is terminated.

FIG. 5 is a flowchart (2) illustrating the processing procedure (Backward) at the time of transmission. FIG. 5 illustrates a processing procedure of the node 100y in a case where an update request is transmitted from the node 100z to the node 100y.

The node 100y adds "individual elements of dst_{z} with the node 100z added to the end thereof" to dst_{y} (step S210). The node 100y determines whether or not the condition of dst_{y} = {φ} is satisfied (step S211). If the condition of dst_{y} = {φ} is satisfied (Yes in step S211), the node 100y transmits an update completion response to the node 100z (step S212).

The node 100y transmits the update request to the node 100x (which may be a plurality of nodes) at the end of individual elements of src_{y} (step S213). The node 100y stands by until receiving an update completion response from the node 100x (step S214).

If the node 100y has not received the update completion response from all the nodes 100x (No in step S215), the process proceeds to step S214. If the node 100y has received the update completion response from all the nodes 100x (Yes in step S215), the process proceeds to step S212.

The node 100y recursively executes the process when the update request is received, which has been described with reference to FIG. 5, until dst_{y} becomes an empty set.

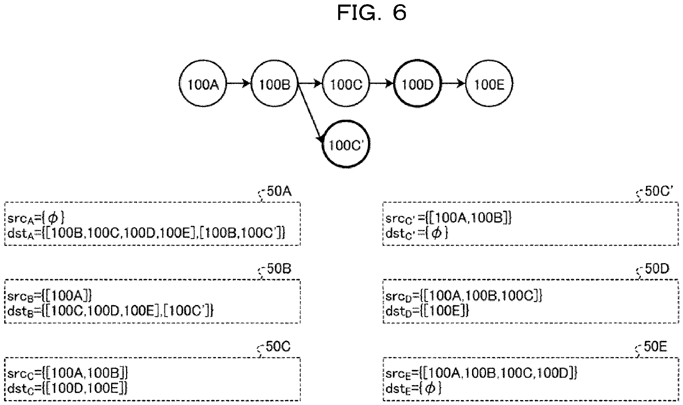

Next, an exemplary process will be described in which the node 100i executes the processes illustrated in FIGs. 2 to 5 and updates the management information 50i. FIGs. 6 to 23 are diagrams for explaining a process at the time of node transmission.

FIG. 6 will be described. As a premise, the distribution source list of the management information 50A of the node 100A is assumed to be "srcA = {φ}", and the distribution destination list is assumed to be "dstA = {[100B, 100C, 100D, 100E], [100B, 100C']}".

The distribution source list of the management information 50B of the node 100B is assumed to be "srcB = {[100A]}", and the distribution destination list is assumed to be "dstB = {[100C, 100D, 100E], [100C']}".

The distribution source list of the management information 50C of the node 100C is assumed to be "srcC = {[100A, 100B]}", and the distribution destination list is assumed to be "dstC = {[100D, 100E]}".

The distribution source list of the management information 50C' of the node 100C' is assumed to be "srcC' = {[100A, 100B]}", and the distribution destination list is assumed to be "dstC' = {φ}".

The distribution source list of the management information 50D of the node 100D is assumed to be "srcD = {[100A, 100B, 100C]}", and the distribution destination list is assumed to be "dstD = {[100E]}".

The distribution source list of the management information 50E of the node 100E is assumed to be "srcD = {[100A, 100B, 100C, 100D]}", and the distribution destination list is assumed to be "dstD = {φ}".

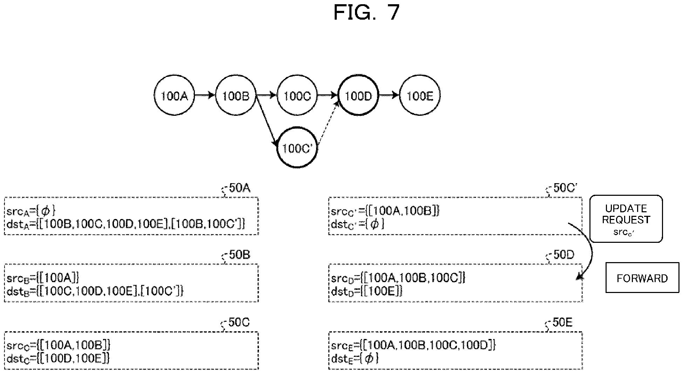

The description proceeds to FIG. 7. The node 100C' transmits an update request "srcC'" to the node 100D.

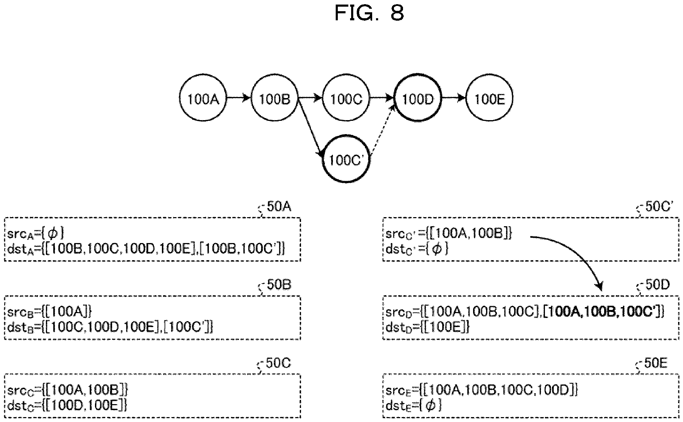

The description proceeds to FIG. 8. Upon reception of the update request "srcC‴, the node 100D merges "100A, 100B, 100C‴ obtained by adding "100C‴ to the end of individual elements of srcC' with srcD. As a result, the distribution source list of the node 100D becomes "srcD = {[100A, 100B, 100C], [100A, 100B, 100C']}".

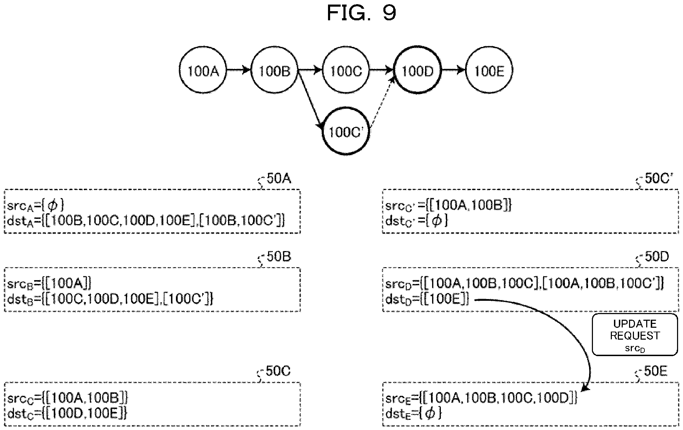

The description proceeds to FIG. 9. The node 100D transmits an update request "srcD" to the node at the top of individual elements of dstD. In the example illustrated in FIG. 9, the node 100D transmits the update request "srcD" to the node 100E.

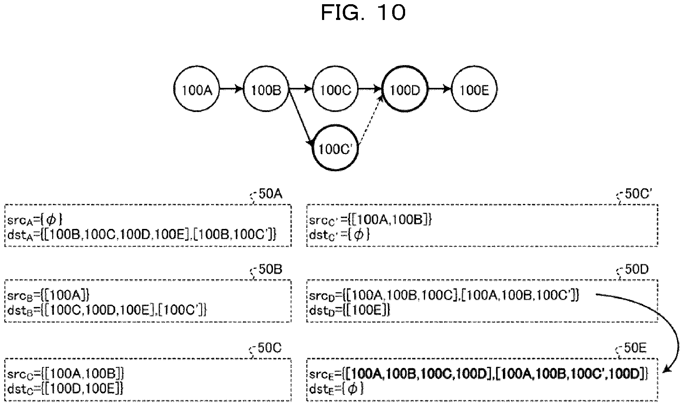

The description proceeds to FIG. 10. Upon reception of the update request "srcD", the node 100E merges "100A, 100B, 100C', 100D" obtained by adding "100D" to the end of individual elements of srcD with srcE. As a result, the distribution source list of the node 100E becomes "srcE = {[100A, 100B, 100C, 100D], [100A, 100B, 100C', 100D]}".

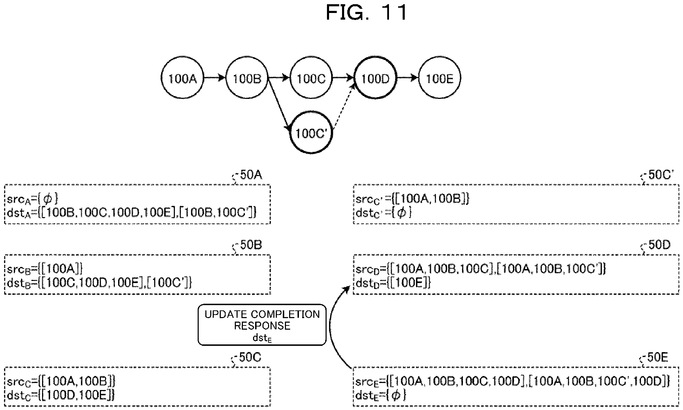

The description proceeds to FIG. 11. Since the distribution destination list is "dstE = {φ}", the node 100E transmits an update completion response "dstE" to the node 100D.

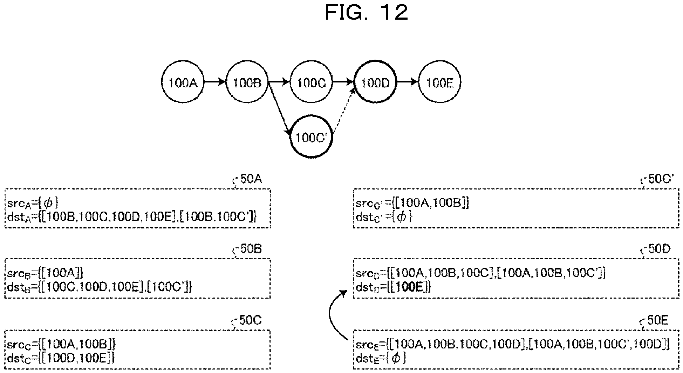

The description proceeds to FIG. 12. Upon reception of the update completion response "dstE", the node 100D merges [E] obtained by adding 100E to the top of individual elements of dstE with dstD. As a result, the distribution destination list of the node 100D becomes "dstD = {[100E]}". Note that the node 100D stands by until receiving the update completion response for all the transmitted update requests.

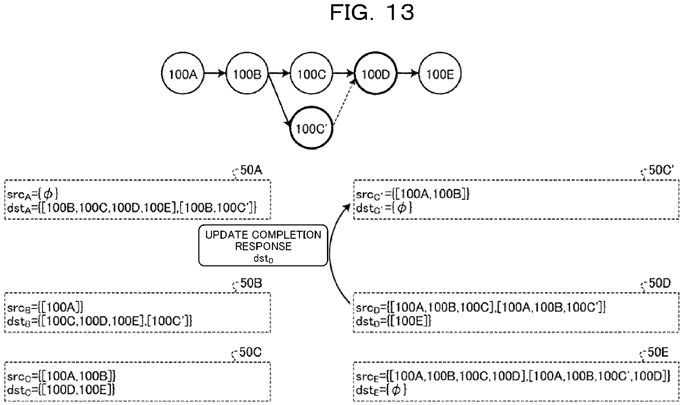

The description proceeds to FIG. 13. The node 100D transmits an update completion response "dstD" to the node 100C'.

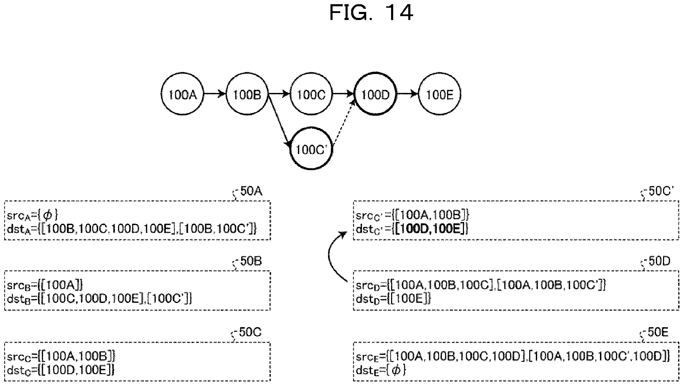

The description proceeds to FIG. 14. Upon reception of the update completion response "dstD", the node 100C' merges "D, E" obtained by adding the node 100D to the top of the individual elements of dstD with dstC'. As a result, the distribution destination list of the node 100C' becomes "dstC' = {[100D, 100E]}".

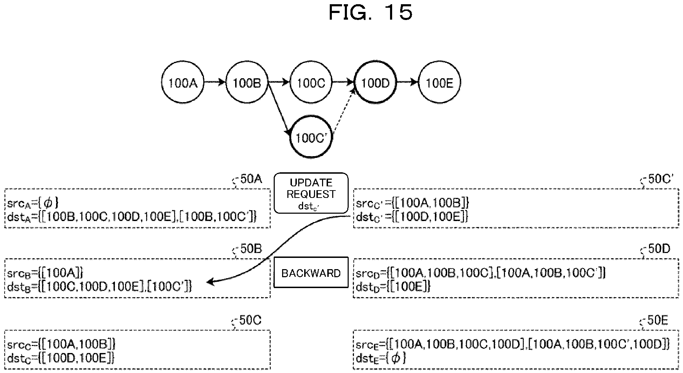

The description proceeds to FIG. 15. The node 100C' transmits an update request "dstC‴ to the node at the end of the individual elements of the distribution source list srcC'. In the example of FIG. 15, the node 100C' transmits the update request "dstC‴ to the node 100B.

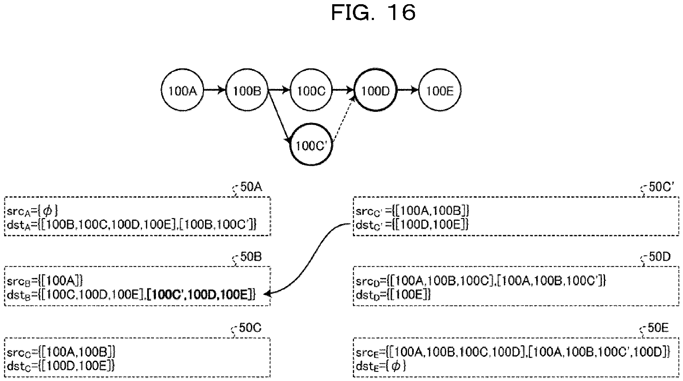

The description proceeds to FIG. 16. Upon reception of the update request "dstC‴, the node 100B merges "100C', 100D, 100E" obtained by adding 100C' to the top of the individual elements of dstC' with dstB. As a result, the distribution destination list of the node 100B becomes "dstB = {[100C, 100D, 100E], [100C', 100D, 100E]}".

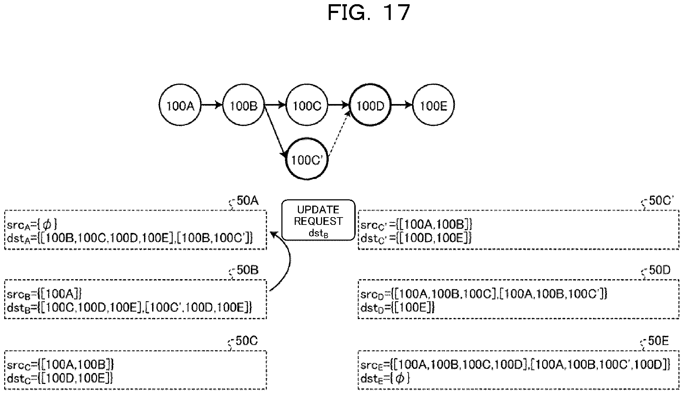

The description proceeds to FIG. 17. The node 100B transmits an update request "dstB" to the node at the end of the individual elements of the distribution source list srcB. In the example of FIG. 17, the node 100B transmits the update request "dstB" to the node 100A.

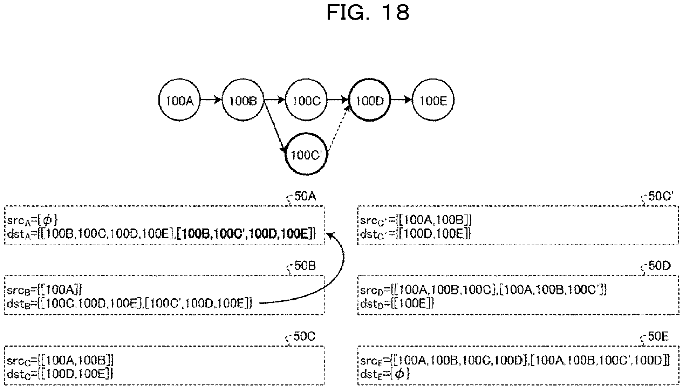

The description proceeds to FIG. 18. Upon reception of the update request "dstB", the node 100A merges "100B, 100C', 100D, 100E" obtained by adding 100B to the top of the individual elements of dstB with dstA. As a result, the distribution destination list of the node 100A becomes "dstA = {[100B, 100C, 100D, 100E], [100B, 100C', 100D, 100E]}".

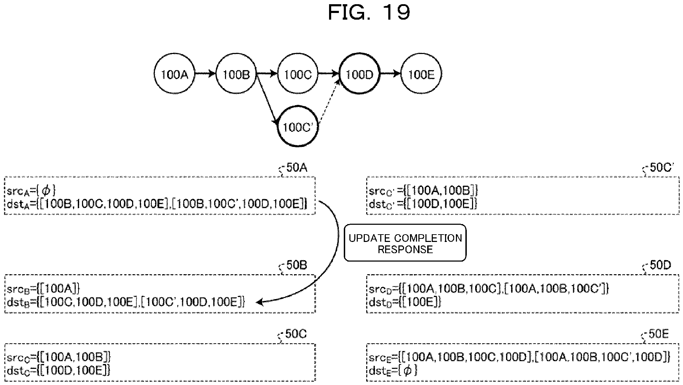

The description proceeds to FIG. 19. Since the distribution source list is "srcA = {φ}", the node 100A transmits an update completion response to the node 100B.

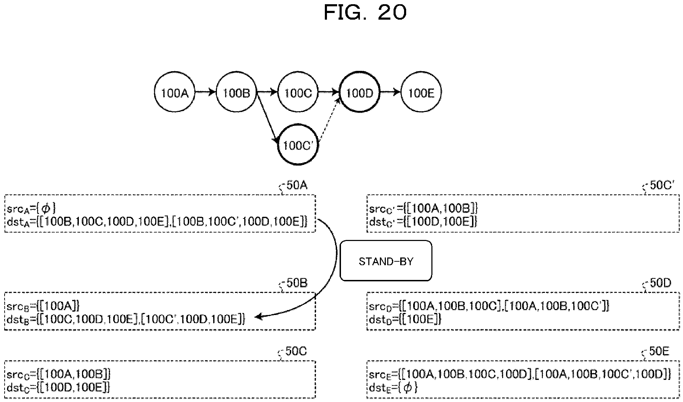

The description proceeds to FIG. 20. The node 100B receives the update completion response. The node 100B stands by until receiving the update completion response for all the transmitted update requests.

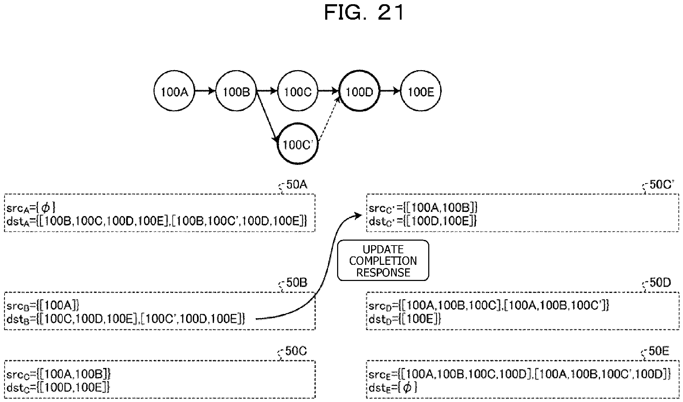

The description proceeds to FIG. 21. The node 100B transmits an update completion response to the node 100C'.

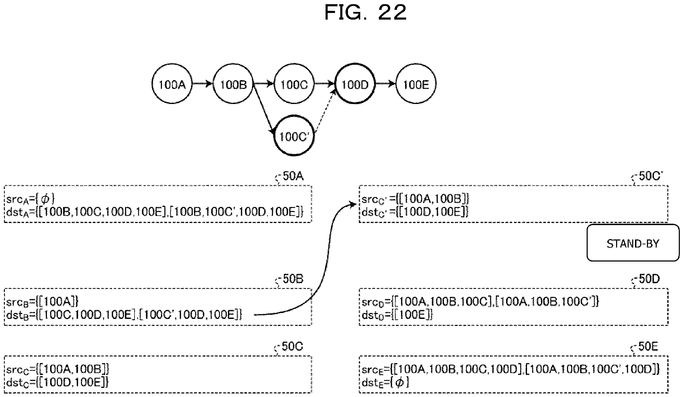

The description proceeds to FIG. 22. The node 100C' receives the update completion response. The node 100C' stands by until receiving the update completion response for all the transmitted update requests.

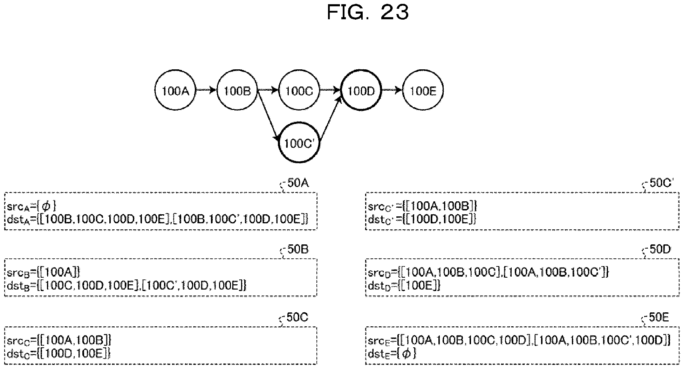

The description proceeds to FIG. 23. When the series of processes by the node 100C' transmitting the update request "srcC‴ to the node 100D is complete, the management information 50A to 50E retain the information illustrated in FIG. 23. As a result, the node 100i is enabled to correctly grasp the data distribution source and the data distribution destination.

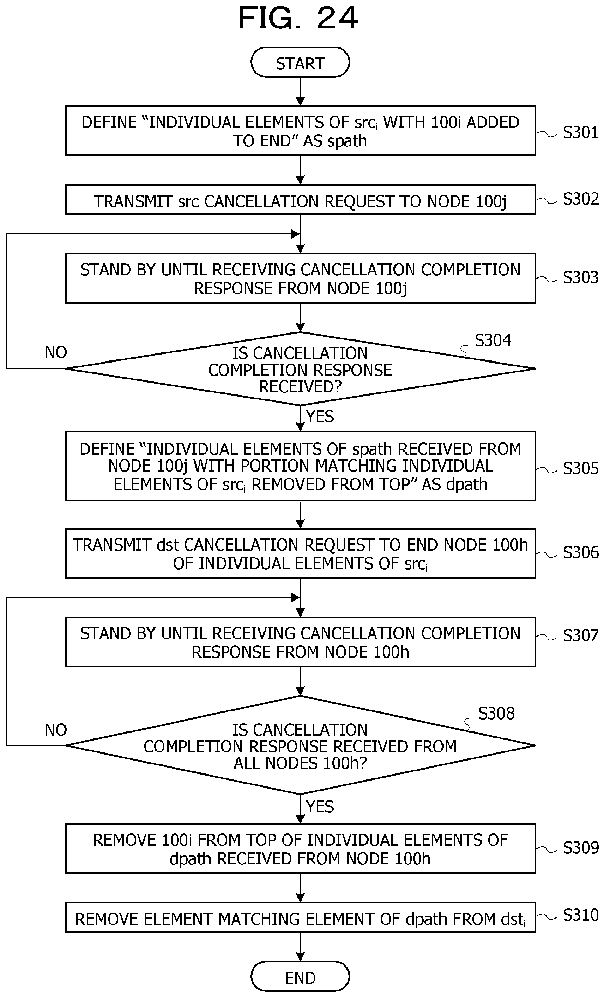

Next, an exemplary processing procedure at the time of transmission cancellation by the node 100i will be described. FIGs. 24 to 26 are flowcharts illustrating the processing procedure at the time of transmission cancellation by the node.

FIG. 24 will be described. In FIG. 24, a case where the node 100i transmits data (spath) related to transmission cancellation to the node 100j will be described. The node 100i defines as spath, "individual elements of srci with the 100i added to the end thereof"(step S301). The node 100i transmits a "src cancellation request" (spath) to the node 100j (step S302). It is noted that the "src cancellation request (spath)" means to be a cancellation request including the data "spath".

The node 100i stands by until receiving a cancellation completion response from the node 100j (step S303). If the node 100i fails the receive the cancellation completion response (No in step S304), the process proceeds to step S303.

On the other hand, if the node 100i has received the cancellation completion response (Yes in step S304), the process proceeds to step S305. The node 100i defines as dpath, "individual elements of spath received from the node 100j with a portion matching the individual elements of srci removed from the top thereof" (step S305).

The node 100i transmits a dst cancellation request (dpath) to the node 100h at the end of the individual elements of srci (step S306). It is noted that the "dst cancellation request (dpath)" means to be a cancellation request including the data "dpath". The node 100i stands by until receiving a cancellation completion response from the node 100h (step S307). If the node 100i has not received the cancellation completion response from all the nodes 100h (No in step S308), the process proceeds to step S307.

On the other hand, if the node 100i has received the cancellation completion response (dpath) from all the nodes 100h (Yes in step S308), the process proceeds to step S309. The node 100i removes 100i from the top of the individual elements of dpath received from the node 100h (step S309). The node 100i removes, from dsti, an element matching the element of dpath (step S310).

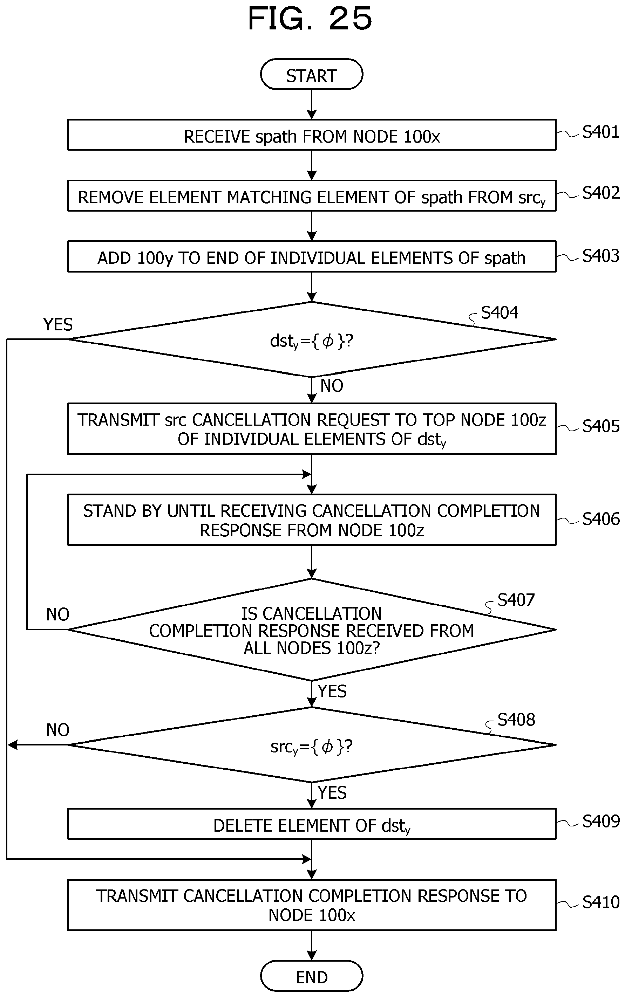

FIG. 25 will be described. FIG. 25 illustrates a processing procedure of the node 100y in a case where a cancellation request is transmitted from the node 100x to the node 100y.

The node 100y receives spath (cancellation request) from the node 100x (step S401). The node 100y removes, from srcy, an element matching the element of spath (step S402).

The node 100y adds 100y to the end of the individual elements of spath (step S403). The node 100y determines whether or not the condition of dsty = {φ} is satisfied (step S404). If the condition of dsty = {φ} is satisfied (Yes in step S404), the node 100y proceeds to step S410.

On the other hand, if the condition of dsty = {φ} is not satisfied (No in step S404), the node 100y proceeds to step S405. The node 100y transmits a src cancellation request (spath) to the node 100z at the top of the individual elements of dsty (step S405).

The node 100y stands by until receiving a cancellation completion response from the node 100z (step S406). If the node 100y has not received the cancellation completion response from all the nodes 100z (No in step S407), the process proceeds to step S406.

On the other hand, if the node 100y has received the cancellation completion response from all the nodes 100z (Yes in step S407), the process proceeds to step S408. The node 100y determines whether or not a condition of srcy = {φ} is satisfied (step S408). If the condition of srcy = {φ} is not satisfied (No in step S408), the node 100y proceeds to step S410.

On the other hand, if the condition of srcy = {φ} is satisfied (Yes in step S408), the node 100y deletes the element of dsty (step S409). The node 100y transmits a cancellation completion response (spath) to the node 100x (step S410).

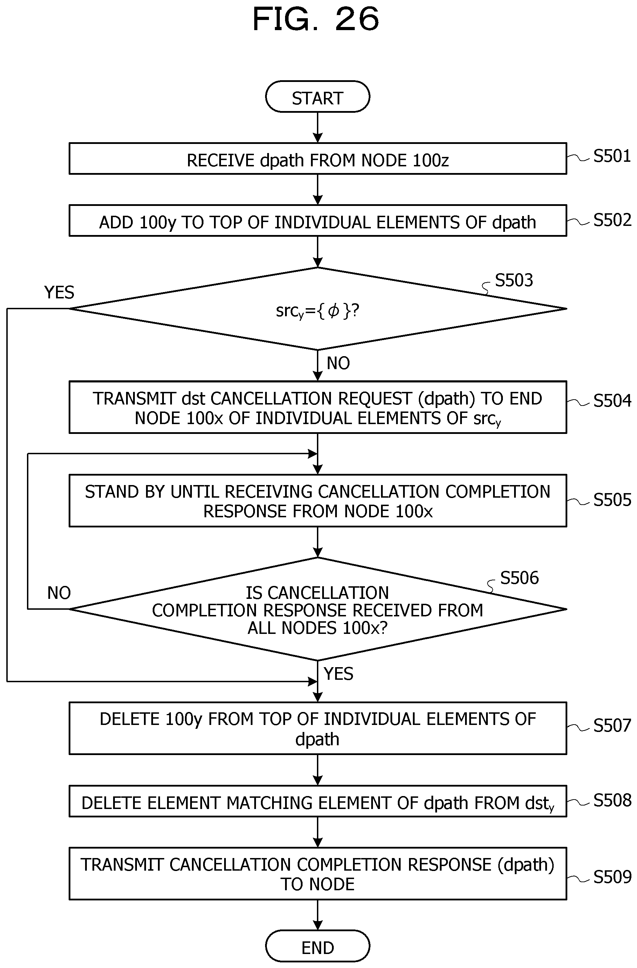

FIG. 26 will be described. FIG. 26 illustrates a processing procedure of the node 100y in a case where a dst cancellation request (dpath) is transmitted from the node 100z to the node 100y.

The node 100y receives dpath from the node 100z (step S501). The node 100y adds 100y to the top of the individual elements of dpath (step S502).

The node 100y determines whether or not the condition of srcy = {φ} is satisfied (step S503). If the condition of srcy = {φ} is satisfied (Yes in step S503), the node 100y proceeds to step S507.

On the other hand, if the condition of srcy = {φ} is not satisfied (No in step S503), the node 100y transmits the dst cancellation request (dpath) to the node 100x at the end of the individual elements of srcy (step S504).

The node 100y stands by until receiving a cancellation completion response from the node 100x (step S505). If the node 100y has not received the cancellation completion response from all the nodes 100x (No in step S506), the process proceeds to step S505.

On the other hand, if the node 100y has received the cancellation completion response from all the nodes 100x (Yes in step S506), the process proceeds to step S507. The node 100y deletes 100y from the top of the individual elements of dpath (step S507).

The node 100y deletes, from dsty, an element matching the element of dpath (step S508). The node 100y transmits a cancellation completion response (dpath) to the node 100z (step S509).

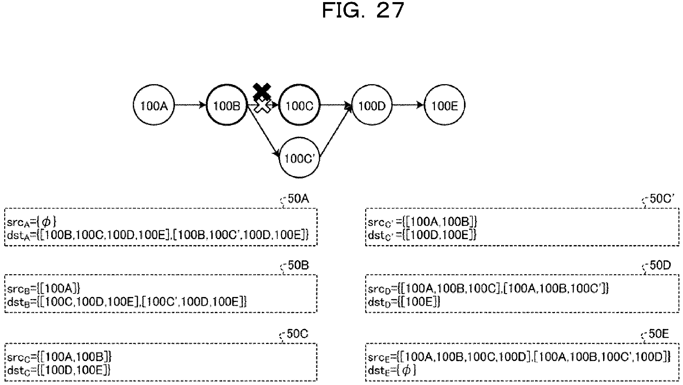

Next, an exemplary process in which, when transmission cancellation is transmitted, the node 100i executes the processes illustrated in FIGs. 24 to 26 and updates the management information 50i will be described. FIGs. 27 to 42 are diagrams for explaining the process at the time of transmission cancellation.

FIG. 27 will be described. As a premise, the distribution source list of the management information 50A of the node 100A is assumed to be "srcA = {φ}", and the distribution destination list is assumed to be "dstA = {[100B, 100C, 100D, 100E], [100B, 100C', 100D, 100E]}".

The distribution source list of the management information 50B of the node 100B is assumed to be "srcB = {[100A]}", and the distribution destination list is assumed to be "dstB = {[100C, 100D, 100E], [100C', 100D, 100E]}".

The distribution source list of the management information 50C of the node 100C is assumed to be "srcC = {[100A, 100B]}", and the distribution destination list is assumed to be "dstC = {[100D, 100E]}".

The distribution source list of the management information 50C' of the node 100C' is assumed to be "srcC' = {[100A, 100B]}", and the distribution destination list is assumed to be "dstC' = {[100D, 100E]}".

The distribution source list of the management information 50D of the node 100D is assumed to be "srcD = {[100A, 100B, 100C], [100A, 100B, 100C']}", and the distribution destination list is assumed to be "dstD = {[100E]}".

The distribution source list of the management information 50E of the node 100E is assumed to be "srcD = {[100A, 100B, 100C, 100D], [100A, 100B, 100C', 100D]}", and the distribution destination list is assumed to be "dstD = {φ}".

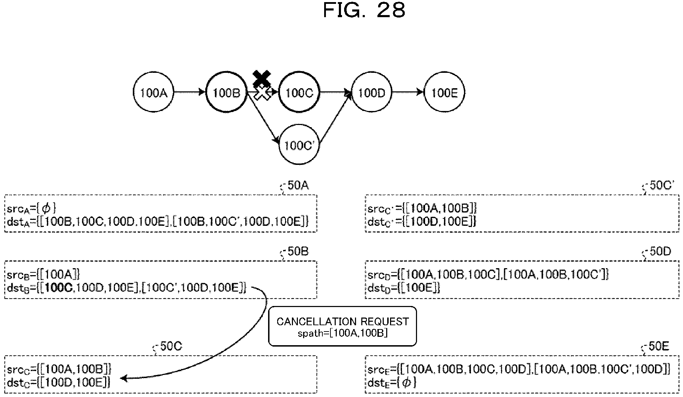

The description proceeds to FIG. 28. The node 100B performs the following process in a case of canceling data transmission from the node 100B to the node 100C. The node 100B defines spath = [100A, 100B] obtained by adding 100B to the end of the individual elements of srcB. The node 100B transmits a cancellation request "spath = [100A, 100B]" to the node 100C.

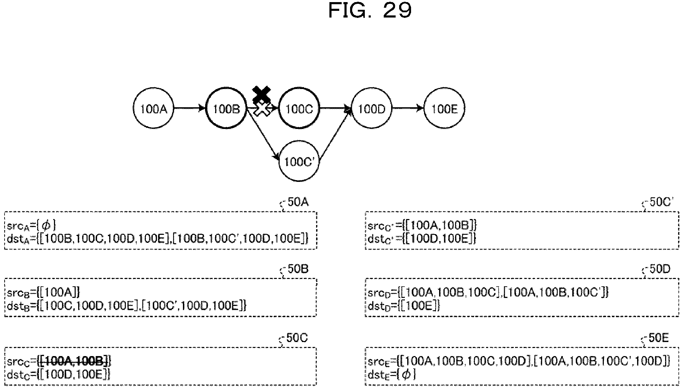

The description proceeds to FIG. 29. Upon reception of the cancellation request, the node 100C deletes spath = [100A, 100B] from srcC.

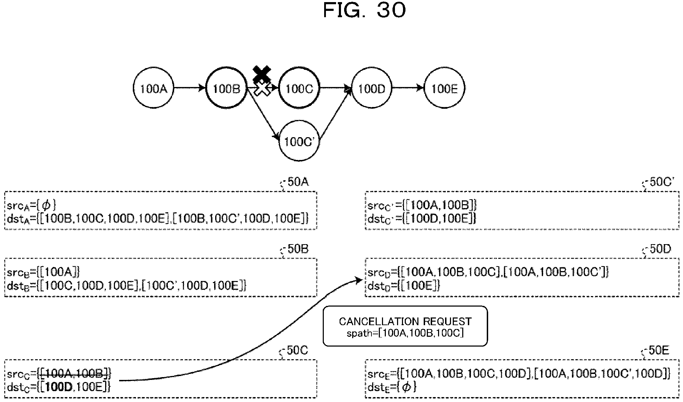

The description proceeds to FIG. 30. The node 100C defines spath = [100A, 100B, 100C] obtained by adding 100C to the end of the individual elements of spath. The node 100C transmits a cancellation request "spath = [100A, 100B, 100C]" to the node 100D.

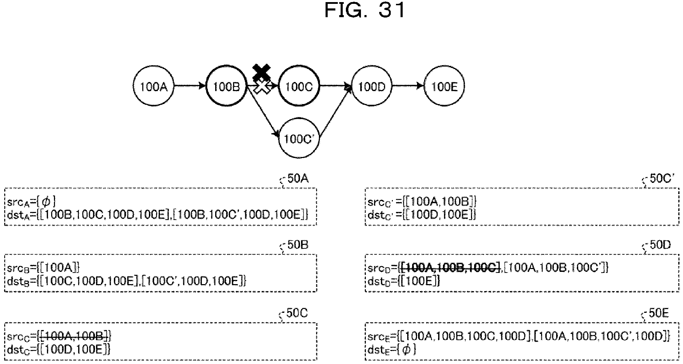

The description proceeds to FIG. 31. Upon reception of the cancellation request, the node 100D deletes spath = [100A, 100B, 100C] from srcD.

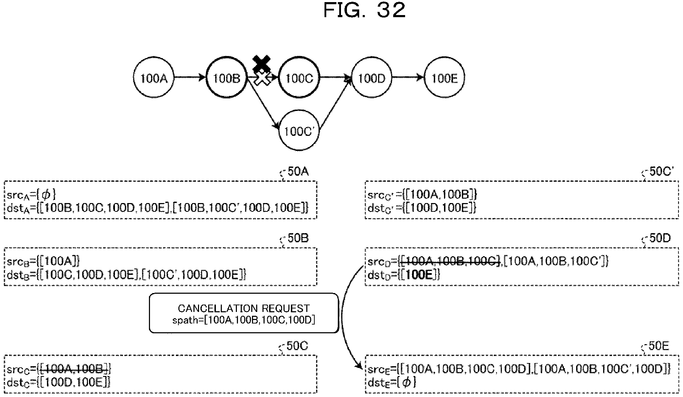

The description proceeds to FIG. 32. The node 100D defines spath = [100A, 100B, 100C, 100D] obtained by adding 100D to the end of the individual elements of spath. The node 100D transmits a cancellation request "spath = [100A, 100B, 100C, 100D]" to the node 100E.

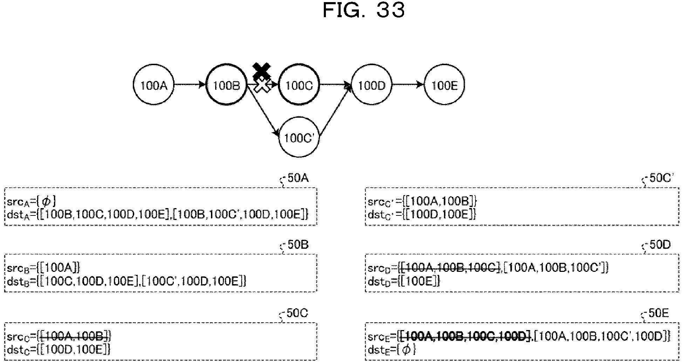

The description proceeds to FIG. 33. Upon reception of the cancellation request, the node 100E deletes spath = [100A, 100B, 100C, 100D] from srcE.

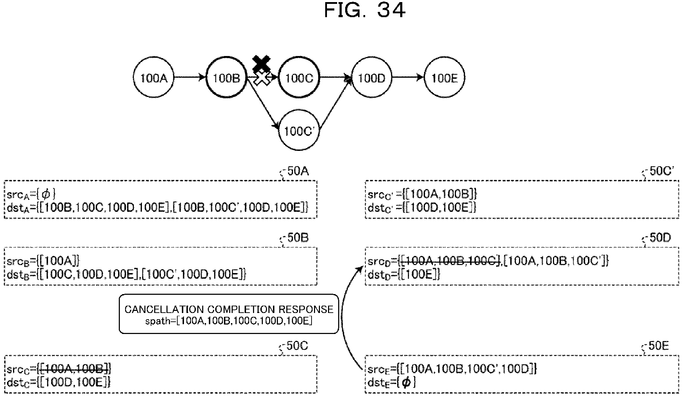

The description proceeds to FIG. 34. The node 100E defines spath = [100A, 100B, 100C, 100D, 100E] obtained by adding 100E to the end of the individual elements of spath. Since dstE is an empty set, the node 100E transmits a cancellation completion response "spath = [100A, 100B, 100C, 100D, 100E]" to the node 100D.

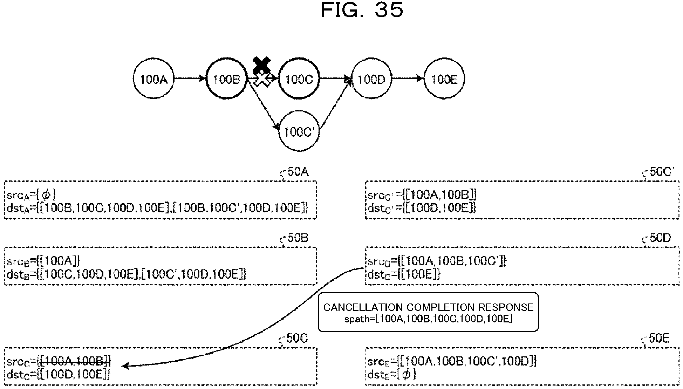

The description proceeds to FIG. 35. Upon reception of the cancellation completion response "spath = [100A, 100B, 100C, 100D, 100E]", the node 100D transmits the cancellation completion response to the node 100C.

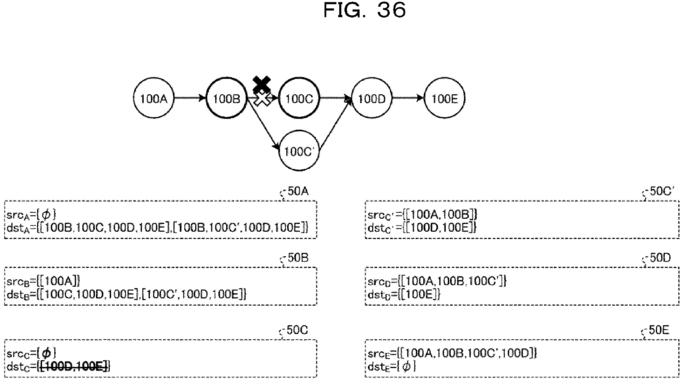

The description proceeds to FIG. 36. Upon reception of the cancellation completion response "spath = [100A, 100B, 100C, 100D, 100E]", the node 100C deletes the element from dstC.

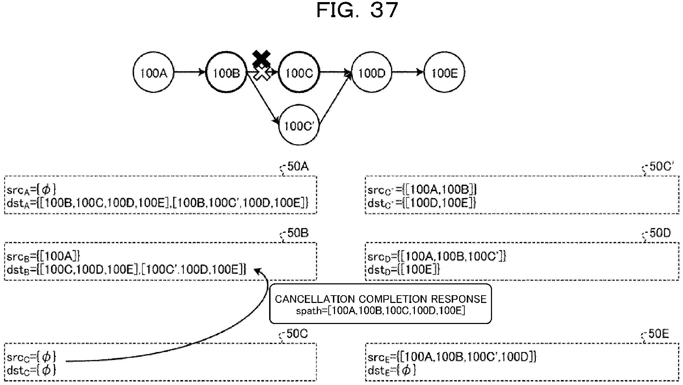

The description proceeds to FIG. 37. The node 100C transmits the cancellation completion response "spath = [100A, 100B, 100C, 100D, 100E]" to the node 100B.

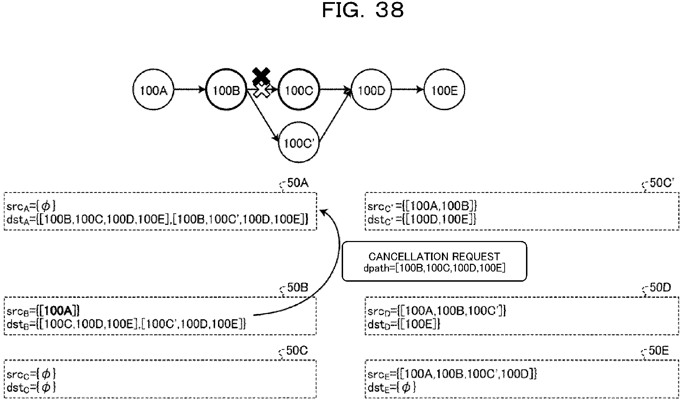

The description proceeds to FIG. 38. Upon reception of the cancellation completion response "spath = [100A, 100B, 100C, 100D, 100E]", the node 100B defines, as dpath, a set of elements obtained by removing srcB from the top of the individual elements of spath. The node 100B transmits a cancellation request "dpath = [100B, 100C, 100D, 100E]" to the node 100A.

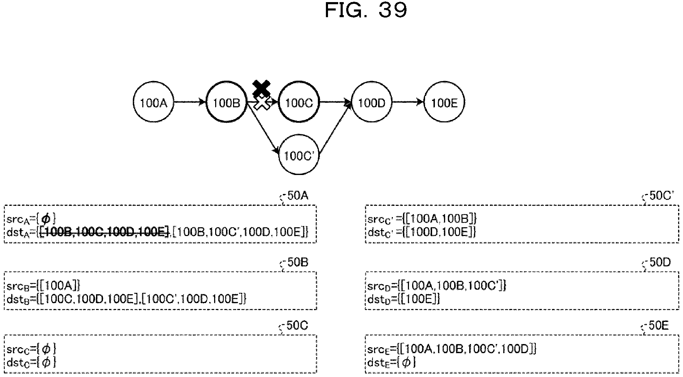

The description proceeds to FIG. 39. Upon reception of the cancellation request "dpath = [100B, 100C, 100D, 100E]", the node 100A deletes dpath = [100B, 100C, 100D, 100E] from dstA.

Here, although illustration is omitted in FIG. 39, in a case other than srcA = {φ}, the node 100A performs the following process. The node 100A transmits a cancellation request "dpath = [100A, 100B, 100C, 100D, 100E]" obtained by adding 100A to the top of the individual elements of dpath to the node at the end of srcA. If a cancellation completion response is returned from the node at the end of srcA, the node 100A deletes 100A from the top of dpath, and deletes dpath from dstA.

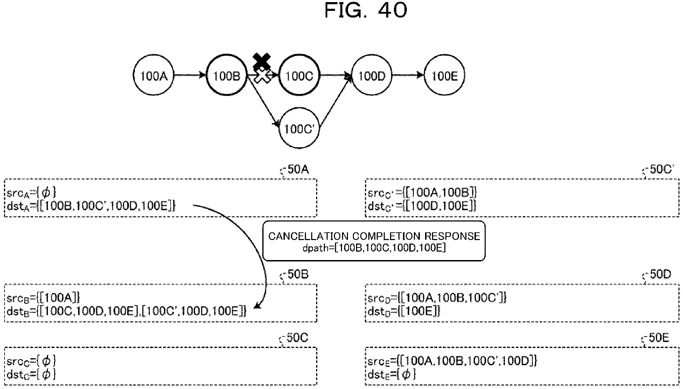

The description proceeds to FIG. 40. Since srcA = {φ} is satisfied, the node 100A transmits a cancellation completion response "dpath = [100B, 100C, 100D, 100E]" to the node 100B.

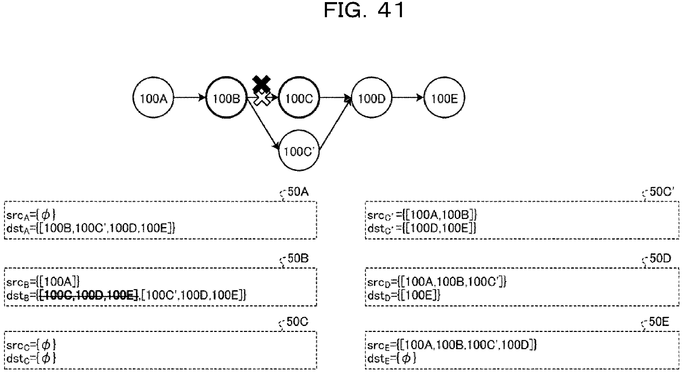

The description proceeds to FIG. 41. Upon reception of the cancellation completion response "dpath = [100B, 100C, 100D, 100E]", the node 100B defines dpath = [100C, 100D, 100E] obtained by removing 100B from the top of the individual elements of dpath. The node 100B removes dpath = [100C, 100D, 100E] from dstB.

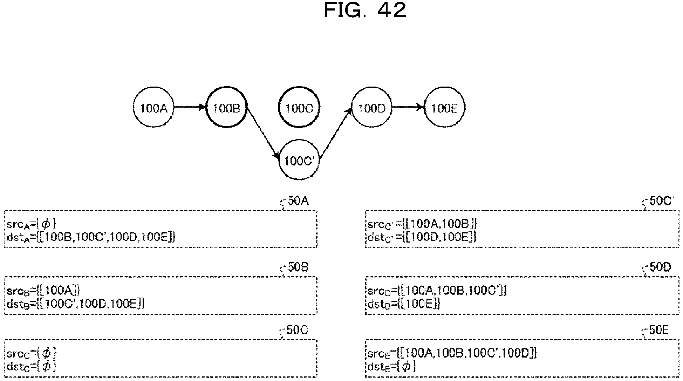

The description proceeds to FIG. 42. When the series of processes by the node 100B canceling the data transmission to the node 100C, the management information 50A and 50B retain the information illustrated in FIG. 42. As a result, the node 100i is enabled to appropriately update the distribution source list and the distribution destination list when data transmission cancellation occurs.

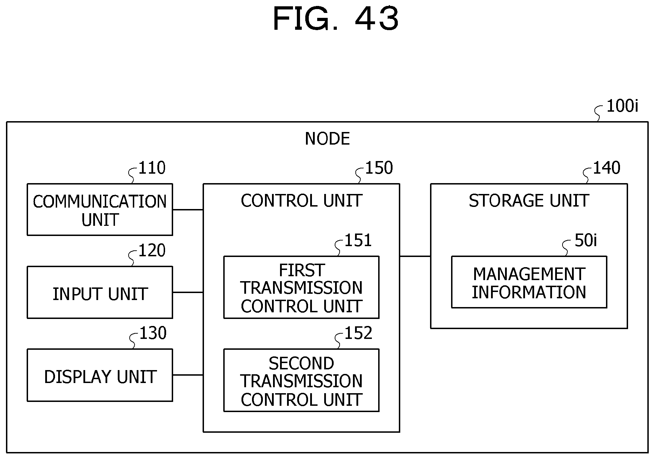

Next, an exemplary configuration of the node 100i according to the present embodiment that performs the processes described above will be described. The node 100i corresponds to any one node of the nodes 100A to 100E illustrated in FIG. 1 and the like. FIG. 43 is a functional block diagram illustrating a node configuration according to the present embodiment. As illustrated in FIG. 43, the node 100i includes a communication unit 110, an input unit 120, a display unit 130, a storage unit 140, and a control unit 150.

The communication unit 110 executes data communication with an external device and the like via a network. The control unit 150 to be described later exchanges data with an external device via the communication unit 110.

The input unit 120 is an input device that inputs various types of information to the control unit 150 of the node 100i. The input unit 120 corresponds to a keyboard, a mouse, a touch panel, or the like.

The display unit 130 is a display device that displays information output from the control unit 150.

The storage unit 140 has the management information 50i. The storage unit 140 corresponds to a semiconductor memory element such as a random access memory (RAM) or a flash memory, or a storage device such as a hard disk drive (HDD).

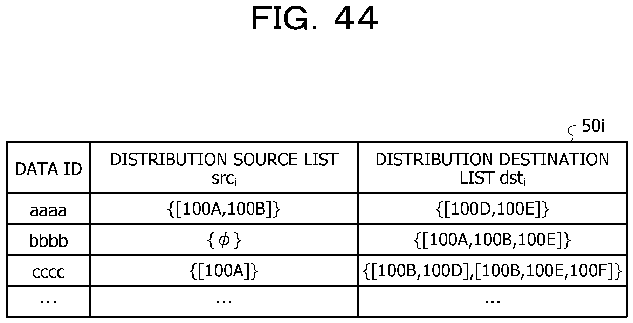

The management information 50i stores the distribution source list srci and the distribution destination list dsti. FIG. 44 is a diagram illustrating an exemplary data structure of the management information. As illustrated in FIG. 44, the management information 50i associates data ID, the distribution source list srci, and the distribution destination list dsti.

The data ID is an identification number assigned to each data to be subject to the nth-order transmission, and is used to identify the distribution source list srci and the distribution destination list dsti of each node. For example, each of the individual distribution source lists srci and distribution destination lists dsti illustrated in FIGs. 6 to 23 and FIGs. 27 to 42 is associated with the same data ID.

The distribution source list srci is a set of lists of nodes that have been passed through from the most upstream node (e.g., node 100A) to the node 100i. The distribution destination list dsti is a set of lists of nodes to be passed through from the node 100i to the most downstream node (e.g., node 100E).

The control unit 150 includes a first transmission control unit 151 and a second transmission control unit 152. The control unit 150 is implemented by a central processing unit (CPU), a graphics processing unit (GPU), a hard-wired logic such as an application specific integrated circuit (ASIC) or a field programmable gate array (FPGA), or the like.

The first transmission control unit 151 executes the data transmission (Forward) from the upstream side to the downstream side described with reference to FIGs. 2 and 3. Furthermore, the first transmission control unit 151 executes the data transmission (Backward) from the downstream side to the upstream side described with reference to FIGs. 4 and 5. With the first transmission control unit 151 of each of the nodes 100A to 100E executing the processes of FIGs. 2 to 5, data of the management information 50A to 50E becomes the data illustrated in FIG. 23, whereby the nodes 100A to 100E are enabled to correctly grasp the data distribution source and the data distribution destination.

For example, in a case where the first transmission control unit 151 receives an update request in which a distribution source list of the upstream adjacent node is set, it updates the distribution source list based on the update request, generates a new update request based on the updated distribution source list, and transmits the new update request to the downstream adjacent node.

In a case where the first transmission control unit 151 receives an update completion response in which a distribution destination list of the downstream adjacent node is set, it updates the distribution destination list based on the update completion response. Note that, in a case where the distribution destination list is an empty set, the first transmission control unit 151 transmits an update completion response to the upstream adjacent node.

Other specific processing procedures related to the first transmission control unit 151 correspond to the processing procedures illustrated in FIGs. 2 to 5.

The second transmission control unit 152 executes the processes at the time of transmission cancellation described with reference to FIGs. 24 to 26. With the second transmission control unit 152 of each of the nodes 100A to 100E executing the processes of FIGs. 24 to 26, data of the management information 50A to 50E becomes the data illustrated in FIG. 42, whereby the distribution source list and the distribution destination list may be appropriately updated when data transmission cancellation occurs.

For example, in a case where the second transmission control unit 152 receives a cancellation request, it deletes the identification information list of the node of the cancellation request from the distribution source list, generates a new cancellation request in which the identification information of its own node is set at the end of the cancellation request list, and transmits the new cancellation request to a downstream node.

In a case where the distribution destination list of its own node is not an empty set, the second transmission control unit 152 transmits the new cancellation request to the downstream adjacent node. In a case where the distribution destination list of its own node is an empty set, the second transmission control unit 152 transmits, to the upstream adjacent node, a cancellation completion response in which the identification information of its own node is set at the end of the cancellation request list.

In a case where the second transmission control unit 152 receives a cancellation completion response from the downstream adjacent node and the distribution source list of its own node is an empty set, it sets (deletes) the distribution destination list of its own node to an empty set.

Other specific processing procedures related to the second transmission control unit 152 correspond to the processing procedures illustrated in FIGs. 24 to 26.

Next, effects of the control system according to the present embodiment will be described. In a case where the node 100i of the control system receives an update request in which a distribution source list of the upstream adjacent node is set, it updates the distribution source list based on the update request, generates a new update request based on the updated distribution source list, and transmits the new update request to the downstream adjacent node. In a case where the node 100i receives an update completion response in which a distribution destination list of the downstream adjacent node is set, it updates the distribution destination list based on the update completion response. In a case where the distribution destination list is an empty set, the node 100i transmits an update completion response to the upstream adjacent node. As a result, the node 100i is enabled to correctly grasp the data distribution source and the data distribution destination.

In a case where the node 100i of the control system receives a cancellation request, it deletes the identification information list of the node of the cancellation request from the distribution source list, generates a new cancellation request in which the identification information of its own node is set at the end of the cancellation request list, and transmits the new cancellation request to a downstream node. In a case where the distribution destination list of its own node is not an empty set, the node 100i transmits the new cancellation request to the downstream adjacent node. In a case where the distribution destination list of its own node is an empty set, the node 100i transmits, to the upstream adjacent node, a cancellation completion response in which the identification information of its own node is set at the end of the cancellation request list. In a case where the node 100i receives a cancellation completion response from the downstream adjacent node and the distribution source list of its own node is an empty set, it deletes the distribution destination list of its own node. As a result, it becomes possible to appropriately update the distribution source list and the distribution destination list when data transmission cancellation occurs.

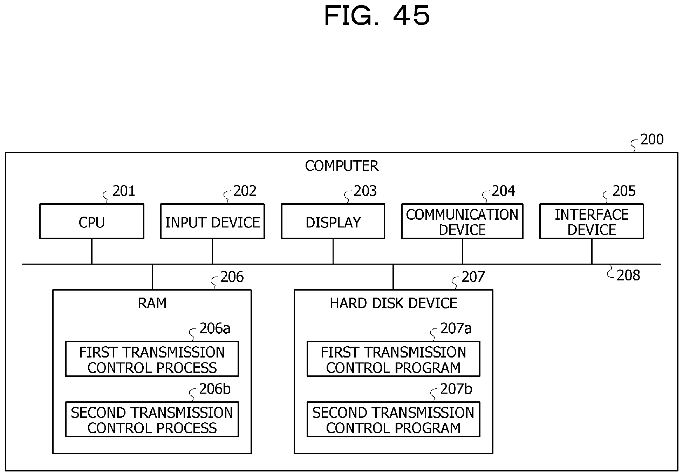

Next, an exemplary hardware configuration of a computer that implements functions similar to those of the node 100i described above will be described. FIG. 45 is a diagram illustrating an exemplary hardware configuration of the computer that implements functions similar to those of the node according to the embodiment.

As illustrated in FIG. 45, a computer 200 includes a CPU 201 that executes various types of arithmetic processing, an input device 202 that receives data input from a user, and a display 203. Furthermore, the computer 200 includes a communication device 204 that exchanges data with another node, an external device, and the like via a wired or wireless network, and an interface device 205. Furthermore, the computer 200 includes a RAM 206 that temporarily stores various types of information, and a hard disk device 207. Additionally, each of the devices 201 to 207 is coupled to a bus 208.

The hard disk device 207 has a first transmission control program 207a and a second transmission control program 207b. Furthermore, the CPU 201 reads each of the programs 207a and 207b, and loads it into the RAM 206.

The first transmission control program 207a functions as a first transmission control process 206a. The second transmission control program 207b functions as a second transmission control process 206b.

Processing of the first transmission control process 206a corresponds to the processing of the first transmission control unit 151. Processing of the second transmission control process 206b corresponds to the processing of the second transmission control unit 152.

Note that each of the programs 207a and 207b may not necessarily be stored in the hard disk device 207 beforehand. For example, each of the programs may be stored in a "portable physical medium" to be inserted into the computer 200, such as a flexible disk (FD), a compact disc read only memory (CD-ROM), a digital versatile disc (DVD), a magneto-optical disk, or an integrated circuit (IC) card. Then, the computer 200 may read and execute each of the programs 207a and 207b.

## Claims

1. A control device comprising:
a storage unit (140) configured to store, in relation to a plurality of control devices that performs nth-order transmission, a distribution source list that stores a list of the plurality of control devices to be passed through from a most upstream control device to the control device and a distribution destination list that stores a list of the plurality of control devices to be passed through from the control device to a most downstream control device; and
a control unit (150) configured to perform control processing including:
in a case where an update request in which a first distribution source list of a first control device being any one of the plurality of control devices is set is received,
updating the distribution source list based on the update request,
in a case where the distribution destination list is not an empty set, generating a new update request based on the updated distribution source list, and
transmitting the new update request to a second control device being a control device in the distribution destination list; and
in a case where an update completion response in which a second distribution destination list of the second control device is set is received from the second control device, updating the distribution destination list based on the update completion response.

2. The control device according to claim 1, wherein the control processing further includes transmitting the update completion response to the first control device when the distribution destination list is an empty set.

3. The control device according to claim 1, wherein
the control processing further includes:
in a case where a cancellation request indicating a request to cancel data transmission from a third control device to the control device is received, deleting a control device identification information list included in the cancellation request from the distribution source list, the cancellation request including the control device identification information list in which identification information of the third control device is added to an end of a third distribution source list of the third control device, the third control device being any one of the plurality of control devices; and
generating a new cancellation request in which identification information of the control device is set at an end of the list of the cancellation request, to transmit the generated new cancellation request to a fourth control device of the plurality of control devices other than the third control device.

4. The control device according to claim 3, wherein
the control processing further includes:
transmitting the new cancellation request to the fourth control device in a case where the distribution destination list of the control device is not an empty set; and
in a case where the distribution destination list of the control device is the empty set, transmitting, to the third control device, a cancellation completion response in which the identification information of the control device is set at the end of the list of the cancellation request.

5. The control device according to claim 4, wherein the control processing further includes:
deleting the distribution destination list of the control device when the cancellation completion response is received from the fourth control device and the distribution source list of the control device is the empty set.

6. A control system comprising a plurality of control devices according to any one of claims 1 to 5.

7. A control method implemented by each control device of a plurality of control devices, the control device including a storage device configured to store, in relation to the plurality of control devices that performs nth-order transmission, a distribution source list that stores a list of the plurality of control devices to be passed through from a most upstream control device to the control device and a distribution destination list that stores a list of the control devices to be passed through from the control device to a most downstream control device, the control method comprising:
in a case where an update request in which a first distribution source list of a first control device being any one of the plurality of control devices is set is received,
updating the distribution source list based on the update request,
in a case where the distribution destination list is not an empty set, generating a new update request based on the updated distribution source list, and
transmitting the new update request to a second control device being a control device in the distribution destination list; and
in a case where an update completion response in which a second distribution destination list of the second control device is set is received from the second control device, updating the distribution destination list based on the update completion response.

8. A control program comprising instructions which, when executed by each control device of a plurality of control devices, cause the control device to perform control processing, the control device including a storage device configured to store, in relation to the plurality of control devices that performs nth-order transmission, a distribution source list that stores a list of the plurality of control devices to be passed through from a most upstream control device to the control device and a distribution destination list that stores a list of the control devices to be passed through from the control device to a most downstream control device, the control processing comprising:
in a case where an update request in which a first distribution source list of a first control device being any one of the plurality of control devices is set is received,
updating the distribution source list based on the update request,
in a case where the distribution destination list is not an empty set, generating a new update request based on the updated distribution source list, and
transmitting the new update request to a second control device being a control device in the distribution destination list; and
in a case where an update completion response in which a second distribution destination list of the second control device is set is received from the second control device, updating the distribution destination list based on the update completion response.

## Patentansprüche

1. Steuervorrichtung, umfassend:
eine Speichereinheit (140), die dazu konfiguriert ist, in Bezug auf eine Vielzahl von Steuervorrichtungen, die eine Übertragung n-ter Ordnung durchführt, eine Verteilungsquellenliste, die eine Liste der Vielzahl von Steuervorrichtungen speichert, die von einer am weitesten stromaufwärts gelegenen Steuervorrichtung an die Steuervorrichtung weitergegeben werden sollen, und eine Verteilungszielliste, die eine Liste der Vielzahl von Steuervorrichtungen speichert, die von der Steuervorrichtung an eine am weitesten stromabwärts gelegene Steuervorrichtung weitergegeben werden sollen, zu speichern; und
eine Steuereinheit (150), die dazu konfiguriert ist, Steuerverarbeitung durchzuführen, einschließlich:
in einem Fall, in dem eine Aktualisierungsanforderung empfangen wird, in der eine erste Verteilungsquellenliste einer ersten Steuervorrichtung, die eine beliebige von der Vielzahl von Steuervorrichtungen ist, festgelegt ist,
Aktualisieren der Verteilungsquellenliste basierend auf der Aktualisierungsanforderung,
in einem Fall, in dem die Verteilungszielliste kein leerer Satz ist, Erzeugen einer neuen Aktualisierungsanforderung basierend auf der aktualisierten Verteilungsquellenliste, und
Übertragen der neuen Aktualisierungsanforderung an eine zweite Steuervorrichtung, die eine Steuervorrichtung in der Verteilungszielliste ist; und
in einem Fall, in dem eine Aktualisierungsabschlussantwort, in der eine zweite Verteilungszielliste der zweiten Steuervorrichtung festgelegt ist, von der zweiten Steuervorrichtung empfangen wird, Aktualisieren der Verteilungszielliste basierend auf der Aktualisierungsabschlussantwort.

2. Steuervorrichtung nach Anspruch 1, wobei die Steuerverarbeitung weiter ein Übertragen der Aktualisierungsabschlussantwort an die erste Steuervorrichtung einschließt, wenn die Verteilungszielliste ein leerer Satz ist.

3. Steuervorrichtung nach Anspruch 1, wobei
die Steuerverarbeitung weiter einschließt:
in einem Fall, in dem eine Stornierungsanforderung empfangen wird, die eine Anforderung zum Stornieren einer Datenübertragung von einer dritten Steuervorrichtung an die Steuervorrichtung angibt, Löschen einer Steuervorrichtungsidentifizierungsinformationsliste, die in der Stornierungsanforderung eingeschlossen ist, aus der Verteilungsquellenliste, wobei die Stornierungsanforderung die Steuervorrichtungsidentifizierungsinformationsliste einschließt, in der Identifizierungsinformationen der dritten Steuervorrichtung zu einem Ende einer dritten Verteilungsquellenliste der dritten Steuervorrichtung hinzugefügt sind, wobei die dritte Steuervorrichtung eine beliebige von der Vielzahl von Steuervorrichtungen ist; und
Erzeugen einer neuen Stornierungsanforderung, in der Identifizierungsinformationen der Steuereinheit an einem Ende der Liste der Stornierungsanforderung festgelegt sind, um die erzeugte neue Stornierungsanforderung an eine vierte Steuereinheit von der Vielzahl von Steuereinheiten, die nicht die dritte Steuereinheit ist, zu übertragen.

4. Steuervorrichtung nach Anspruch 3, wobei
die Steuerverarbeitung weiter einschließt:
Übertragen der neuen Stornierungsanforderung an die vierte Steuervorrichtung in einem Fall, in dem die Verteilungszielliste der Steuervorrichtung kein leerer Satz ist; und
in einem Fall, in dem die Verteilungszielliste der Steuervorrichtung der leere Satz ist, Übertragen einer Stornierungsabschlussantwort, in der die Identifizierungsinformationen der Steuervorrichtung am Ende der Liste der Stornierungsanforderung festgelegt sind, an die dritte Steuervorrichtung.

5. Steuervorrichtung nach Anspruch 4, wobei die Steuerverarbeitung weiter einschließt:
Löschen der Verteilungszielliste der Steuervorrichtung, wenn die Stornierungsabschlussantwort von der vierten Steuervorrichtung empfangen wird und die Verteilungsquellenliste der Steuervorrichtung der leere Satz ist.

6. Steuersystem, umfassend eine Vielzahl von Steuervorrichtungen nach einem der Ansprüche 1 bis 5.

7. Steuerverfahren, implementiert durch jede Steuervorrichtung von einer Vielzahl von Steuervorrichtungen, wobei die Steuervorrichtung eine Speichervorrichtung einschließt, die dazu konfiguriert ist, in Bezug auf die Vielzahl von Steuervorrichtungen, die eine Übertragung n-ter Ordnung durchführt, eine Verteilungsquellenliste, die eine Liste der Steuervorrichtungen speichert, die von einer am weitesten stromaufwärts gelegenen Steuervorrichtung an die Steuervorrichtung weitergegeben werden sollen, und eine Verteilungszielliste, die eine Liste der Vielzahl von Steuervorrichtungen speichert, die von der Steuervorrichtung an eine am weitesten stromabwärts gelegene Steuervorrichtung weitergegeben werden sollen, zu speichern, das Steuerverfahren umfassend:
in einem Fall, in dem eine Aktualisierungsanforderung empfangen wird, in der eine erste Verteilungsquellenliste einer ersten Steuervorrichtung, die eine beliebige von der Vielzahl von Steuervorrichtungen ist, festgelegt ist,
Aktualisieren der Verteilungsquellenliste basierend auf der Aktualisierungsanforderung,
in einem Fall, in dem die Verteilungszielliste kein leerer Satz ist, Erzeugen einer neuen Aktualisierungsanforderung basierend auf der aktualisierten Verteilungsquellenliste, und
Übertragen der neuen Aktualisierungsanforderung an eine zweite Steuervorrichtung, die eine Steuervorrichtung in der Verteilungszielliste ist; und
in einem Fall, in dem eine Aktualisierungsabschlussantwort, in der eine zweite Verteilungszielliste der zweiten Steuervorrichtung festgelegt ist, von der zweiten Steuervorrichtung empfangen wird, Aktualisieren der Verteilungszielliste basierend auf der Aktualisierungsabschlussantwort.

8. Steuerprogramm, umfassend Anweisungen, die, wenn sie von jeder Steuervorrichtung einer Vielzahl von Steuervorrichtungen ausgeführt werden, die Steuervorrichtung veranlassen, eine Steuerverarbeitung durchzuführen, wobei die Steuervorrichtung eine Speichervorrichtung einschließt, die dazu konfiguriert ist, in Bezug auf die Vielzahl von Steuervorrichtungen, die eine Übertragung n-ter Ordnung durchführt, eine Verteilungsquellenliste, die eine Liste der Steuervorrichtungen speichert, die von einer am weitesten stromaufwärts gelegenen Steuervorrichtung an die Steuervorrichtung weitergegeben werden sollen, und eine Verteilungszielliste, die eine Liste der Vielzahl von Steuervorrichtungen speichert, die von der Steuervorrichtung an eine am weitesten stromabwärts gelegene Steuervorrichtung weitergegeben werden sollen, zu speichern, die Steuerverarbeitung umfassend:
in einem Fall, in dem eine Aktualisierungsanforderung empfangen wird, in der eine erste Verteilungsquellenliste einer ersten Steuervorrichtung, die eine beliebige von der Vielzahl von Steuervorrichtungen ist, festgelegt ist,
Aktualisieren der Verteilungsquellenliste basierend auf der Aktualisierungsanforderung,
in einem Fall, in dem die Verteilungszielliste kein leerer Satz ist, Erzeugen einer neuen Aktualisierungsanforderung basierend auf der aktualisierten Verteilungsquellenliste, und
Übertragen der neuen Aktualisierungsanforderung an eine zweite Steuervorrichtung, die eine Steuervorrichtung in der Verteilungszielliste ist; und
in einem Fall, in dem eine Aktualisierungsabschlussantwort, in der eine zweite Verteilungszielliste der zweiten Steuervorrichtung festgelegt ist, von der zweiten Steuervorrichtung empfangen wird, Aktualisieren der Verteilungszielliste basierend auf der Aktualisierungsabschlussantwort.

## Revendications

1. Dispositif de commande comprenant :
une unité de stockage (140) configurée pour stocker, par rapport à une pluralité de dispositifs de commande qui réalisent une transmission de nième ordre, une liste de source de distribution qui stocke une liste de la pluralité de dispositifs de commande à transférer depuis un dispositif de commande le plus en amont vers le dispositif de commande et une liste de destination de distribution qui stocke une liste de la pluralité de dispositifs de commande à transférer depuis le dispositif de commande vers un dispositif de commande le plus en aval ; et
une unité de commande (150) configurée pour réaliser un traitement de commande incluant : dans un cas où une demande de mise à jour dans laquelle une première liste de source de distribution d'un premier dispositif de commande étant l'un quelconque de la pluralité de dispositifs de commande est définie est reçue,
la mise à jour de la liste de source de distribution sur la base de la demande de mise à jour,
dans un cas où la liste de destination de distribution n'est pas un ensemble vide, la génération d'une nouvelle demande de mise à jour sur la base de la liste de source de distribution mise à jour, et
la transmission de la nouvelle demande de mise à jour à un deuxième dispositif de commande étant un dispositif de commande dans la liste de destination de distribution ; et
dans un cas où une réponse d'achèvement de mise à jour dans laquelle une seconde liste de destination de distribution du deuxième dispositif de commande est définie est reçue du deuxième dispositif de commande, la mise à jour de la liste de destination de distribution sur la base de la réponse d'achèvement de mise à jour.

2. Dispositif de commande selon la revendication 1, dans lequel le traitement de commande inclut en outre la transmission de la réponse d'achèvement de mise à jour au premier dispositif de commande lorsque la liste de destination de distribution est un ensemble vide.

3. Dispositif de commande selon la revendication 1, dans lequel
le traitement de commande inclut en outre :
dans un cas où une demande d'annulation indiquant une demande pour annuler une transmission de données depuis un troisième dispositif de commande vers le dispositif de commande est reçue, la suppression d'une liste d'informations d'identification de dispositif de commande incluse dans la demande d'annulation à partir de la liste de source de distribution, la demande d'annulation incluant la liste d'informations d'identification de dispositif de commande dans laquelle des informations d'identification du troisième dispositif de commande sont ajoutées à une fin d'une troisième liste de source de distribution du troisième dispositif de commande, le troisième dispositif de commande étant l'un quelconque de la pluralité de dispositifs de commande ; et
la génération d'une nouvelle demande d'annulation dans laquelle des informations d'identification du dispositif de commande sont définies à une fin de la liste de la demande d'annulation, pour transmettre la nouvelle demande d'annulation générée vers un quatrième dispositif de commande de la pluralité de dispositifs de commande autre que le troisième dispositif de commande.

4. Dispositif de commande selon la revendication 3, dans lequel
le traitement de commande inclut en outre :
la transmission de la nouvelle demande d'annulation vers le quatrième dispositif de commande dans un cas où la liste de destination de distribution du dispositif de commande n'est pas un ensemble vide ; et
dans un cas où la liste de destination de distribution du dispositif de commande est l'ensemble vide, la transmission, vers le troisième dispositif de commande, d'une réponse d'achèvement d'annulation dans laquelle les informations d'identification du dispositif de commande sont définies à la fin de la liste de la demande d'annulation.

5. Dispositif de commande selon la revendication 4, dans lequel le traitement de commande inclut en outre :
la suppression de la liste de destination de distribution du dispositif de commande lorsque la réponse d'achèvement d'annulation est reçue du quatrième dispositif de commande et la liste de source de distribution du dispositif de commande est l'ensemble vide.

6. Système de commande comprenant une pluralité de dispositifs de commande selon l'une quelconque des revendications 1 à 5.

7. Procédé de commande mis en œuvre par chaque dispositif de commande d'une pluralité de dispositifs de commande, le dispositif de commande incluant un dispositif de stockage configuré pour stocker, par rapport à la pluralité de dispositifs de commande qui réalisent une transmission de nième ordre, une liste de source de distribution qui stocke une liste de la pluralité de dispositifs de commande à transférer depuis un dispositif de commande le plus en amont vers le dispositif de commande et une liste de destination de distribution qui stocke une liste des dispositifs de commande à transférer depuis le dispositif de commande vers un dispositif de commande le plus en aval, le procédé de commande comprenant :
dans un cas où une demande de mise à jour dans laquelle une première liste de source de distribution d'un premier dispositif de commande étant l'un quelconque de la pluralité de dispositifs de commande est définie est reçue,
la mise à jour de la liste de source de distribution sur la base de la demande de mise à jour,
dans un cas où la liste de destination de distribution n'est pas un ensemble vide, la génération d'une nouvelle demande de mise à jour sur la base de la liste de source de distribution mise à jour, et
la transmission de la nouvelle demande de mise à jour à un deuxième dispositif de commande étant un dispositif de commande dans la liste de destination de distribution ; et
dans un cas où une réponse d'achèvement de mise à jour dans laquelle une seconde liste de destination de distribution du deuxième dispositif de commande est définie est reçue du deuxième dispositif de commande, la mise à jour de la liste de destination de distribution sur la base de la réponse d'achèvement de mise à jour.

8. Programme de commande comprenant des instructions qui, lorsqu'elles sont exécutées par chaque dispositif de commande d'une pluralité de dispositifs de commande, amènent le dispositif de commande à réaliser un traitement de commande, le dispositif de commande incluant un dispositif de stockage configuré pour stocker, par rapport à la pluralité de dispositifs de commande qui réalisent une transmission de nième ordre, une liste de source de distribution qui stocke une liste de la pluralité de dispositifs de commande à transférer depuis un dispositif de commande le plus en amont vers le dispositif de commande et une liste de destination de distribution qui stocke une liste des dispositifs de commande à transférer depuis le dispositif de commande vers un dispositif de commande le plus en aval, le traitement de commande comprenant :
dans un cas où une demande de mise à jour dans laquelle une première liste de source de distribution d'un premier dispositif de commande étant l'un quelconque de la pluralité de dispositifs de commande est définie est reçue,
la mise à jour de la liste de source de distribution sur la base de la demande de mise à jour,
dans un cas où la liste de destination de distribution n'est pas un ensemble vide, la génération d'une nouvelle demande de mise à jour sur la base de la liste de source de distribution mise à jour, et
la transmission de la nouvelle demande de mise à jour à un deuxième dispositif de commande étant un dispositif de commande dans la liste de destination de distribution ; et
dans un cas où une réponse d'achèvement de mise à jour dans laquelle une seconde liste de destination de distribution du deuxième dispositif de commande est définie est reçue du deuxième dispositif de commande, la mise à jour de la liste de destination de distribution sur la base de la réponse d'achèvement de mise à jour.
